# EUROPÄISCHE PATENTSCHRIFT

(11) **EP 0 293 665 B1**
(45) Veröffentlichungstag und Bekanntmachung des Hinweises auf die Patenterteilung: **14.04.1993**
(21) Anmeldenummer: 88107894.3
(22) Anmeldetag: 18.05.1988
(51) Int. Cl.: A46D 3/04

(54) **Verfahren und Vorrichtung zur Herstellung von Borstenwaren aus Kunststoff**
Method and apparatus for manufacturing brushware from synthetic materials
Procédé et appareil pour la fabrication de brosses en matériau plastique

(30) Priorität: 05.06.1987 DE 3718811
(43) Veröffentlichungstag der Anmeldung: 07.12.1988
(73) Patentinhaber: CORONET-Werke Gesellschaft mit beschränkter Haftung, 69483 Wald-Michelbach (DE)
(72) Erfinder: Weihrauch, Georg, D-6948 Wald-Michelbach / Odw. (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- DE-A- 2 808 965
- DE-A- 2 922 877

## Beschreibung

Die Erfindung betrifft Verfahren zur Herstellung von aus Borstenträger und Borsten aus Kunststoff bestehenden Borstenwaren nach dem Oberbegriff der Patentansprüche 1 und 7. Ferner ist die Erfindung auf Vorrichtungen zur Durchführung dieser Verfahren nach dem Oberbegriff der Patentansprüche 12 un 22 gerichtet.

In neuerer Zeit werden Borstenwaren, wie Bürsten, Besen, Pinsel od. dgl., in zunehmendem Maß vollständig auf Kunststoff gefertigt. Dabei hat es nicht an Versuchen gefehlt, die auch heute noch übliche mechanische Befestigung der Borsten am Borstenträger durch thermische Verbindungsverfahren ersetzen, bei denen der Borstenträger an der Borsten-Aufnahmeseite und gegebenenfalls die Borsten an ihrem Befestigungsende durch Aufschmelzen in weichplastischem Zustand versetzt und anschließend unter Andruck zusammengeführt werden. Dabei reicht es unter Umständen, den Borstenträger nur bereichsweise an den Stellen aufzuschmelzen, an denen einzelne Borstenbündel befestigt werden sollen. Beim Aufschmelzen der Borstenenden eines Borstenbündels fließt der Kunststoff zu einer Verdickung zusammen, die zugleich Grundlage für die Verbindung der Borsten untereinander bildet. Je nach Art der Werkstoff-Paarung von Borsten und Borstenträger entsteht eine Schweißverbindung, also eine stoffschlüssige Verbindung beider Werkstoffe, oder eine Fügeverbindung, bei der die Borsten mit ihrem verdickten Ende von dem weichplastischen Kunststoff des Borstenträgers umschlossen und auf diese Weise formschlüssig gehalten werden (DE-OS 34 03 341).

Die Wirtschaftlichkeit dieser Verfahren hängt maßgeblich von der Arbeitsgeschwindigkeit der hierfür verwendeten Vorrichtungen ab. So ist es bekannt, einen Borsten-Endlosstrang an die Vorrichtung heranzuführen, von dem Strang die Borstenbündel in der gewünschten Länge abzuschneiden und nach gleichzeitigem Erwärmen der Borstenträger-Aufnahmeseite und der Borstenenden zusammenzuführen und in der zusammengeführten Lage zu halten, bis nach ausreichender Abkühlung eine feste Verbindung hergestellt ist (DE-OS 34 03 341, 28 12 746). Bei diesem Verfahren erfolgt das Zuführen, Abschneiden, Aufschmelzen, Verbinden und Abkühlen an einer einzigen Arbeitsstation. Die Taktzeit einer nach diesem Verfahren arbeitenden Vorrichtung ist naturgemäß sehr groß, insbesondere größer als bei mechanischen Befestigungsverfahren, so daß hiermit eine wirtschaftliche Fertigung von Borstenwaren nur in begrenztem Umfang möglich ist.

Es ist deshalb auch schon vorgeschlagen worden (DE-OS 28 49 510) auf einem Revolverteller mehrere im gleichen Winkelabstand zueinander angeordnete Halter vorzusehen, die jeweils einen Borstenträger aus Kunststoff aufnehmen können. In einer ersten Station werden die Borstenträger aus einem Magazin in einen Halter am Revolverteller übergeben. In der folgenden Station werden die Borsten-Aufnahmeseite des Borstenträgers aufgeschmolzen und zugleich Aufnahmelöcher eingeformt. An der dritten Station erfolgt von außen die Zuführung der Borstenbündel vom Endlosstrang, wobei sämtliche Bündel eines Borstenbesatzes gleichzeitig zugeführt werden. Die Borstenbündel werden in dieser Station an ihrem vorlaufenden Ende aufgeschmolzen und anschließend auf die Borsten-Aufnahmeseite des Borstenträgers aufgedrückt. Nach einer für den Weitertransport ausreichenden Abkühlung gelangt der Borstenträger mit den aufgesetzten Borsten in eine weitere Kühlstation, anschließend in eine erste Nachbearbeitungsstation, in der die Borsten auf Endmaß geschnitten werden, und daraufhin in eine weitere Nachbearbeitungsstation, in der die Bürste ausgeputzt wird. Schließlich gelangt die fertige Bürste wieder in die Aufgabeposition, in der sie abgegeben und ein neuer Borstenträger zugeführt wird. Bei diesem Verfahren ergibt sich die längste Taktzeit an der Zuführstation der Borsten, an der zugleich Aufschmelzen von Borsten und Borstenträger und das Zusammenfügen beider stattfindet. Danach muß eine ausreichend lange Kühlzeit vorgesehen sein, um die für den Weitertransport notwendige Aushärtung der Schmelze zu erreichen. Alle anderen Arbeitsschritte ließen sich theoretisch schneller durchführen, doch ist dies aufgrund der langen Taktzeit an der Zuführ- und Fügestation nicht möglich.

Ähnlich verhält es sich bei dem eingangs erwähnten Verfahren (DE-OS 28 08 965), bei dem zwei Revolverteller mit parallelen Achsen nebeneinander angeordnet sind, von denen der eine in mehreren Positionen Halter für den Borstenträger, der andere in mehreren Positionen Klemmeinrichtungen für die Borstenbündel aufweist. Der Revolverteiller mit den Haltern für die Borstenträger läuft an einem Magazin vorbei, aus dem jeweils ein Borstenträger in einen Halter überführt wird. Der Halter läuft dann an einer Station mit Heizeinrichtung vorbei, an der die Borsten-Aufnahmeseite aufgeschmolzen und zugleich mit Aufnahmelöchern versehen wird. Der Borstenträger gelangt dann in eine Station, an der sich die beiden Revolverteller berühren. Der andere Revolverteller weist an einer ersten Station eine Übergabeeinrichtung auf, mittels der die bereits geschnittenen Borstenbündel in einer der Besteckung entsprechenden Anzahl aus einem Magazin entnommen und in die am Revolverteller befindliche Klemmeinrichtung eingesetzt werden. In einer zweiten Station werden die freien Borstenenden, die der Befestigung dienen, vor eine Heizeinrichtung gefahren, die die Borstenenden aufschmilzt und so miteinander verbindet. Schließlich gelangt auch die Klemmeinrichtung mit dem endseitig aufgeschmolzenen Borstenbündel in die gemeinsame Station, in der die Borsten auf den Borstenträger am anderen Revolverteller übergeben, auf die Borsten-Aufnahmeseite aufgedrückt und Borsten und Borstenträger abgekühlt werden, bis auch hier die notwendige Transportfestigkeit vorhanden ist. Anschließend gelangt der mit Borsten bestückte Borstenträger in eine Abgabestation. Gegenüber dem zuvor genannten Verfahren ergibt sich eine Taktzeit-Verkürzung dadurch, daß das Aufschmelzen sowohl des Borstenträgers als auch der Borsten an jeweils einer eigenen Station der beiden Revolverteller erfolgt, während an der gemeinsamen Station nur noch das Zusammenführen und Abkühlen geschieht. Gleichwohl ist diese Taktzeit-Verkürzung nur unbedeutend, da das Zusammenführen und Fügen von Borsten und Borstenträger sowie das vor dem Weitertransport notwendige Abkühlen immer noch zu einer langen Taktzeit führen.

Neben den vorgenannten Schweiß- und Fügeverfahren ist es seit dem Aufkommen plastisch verformbarer bzw. schmelzflüssig verarbeitungsfähiger und schließlich der ausschäumbaren Kunststoffe bekannt, den Borstenträger in Preß-, Gieß-, Spritzguß- oder Schäumformen herzustellen und anläßlich dieser Herstellung die Enden der Borsten in den Kunststoff einzubetten (US-PS 105 373, 654 184, 2 303 800, 3 408 112, 4 132 449, DE-PS 845 933, DE-AS 1 050 304). Dabei werden die Borsten in einer der beiden Formteile der zweiteiligen Form durch Aufnahmeöffnungen eingeführt, bis ihre Enden in den Formraum hineinragen und anschließend abgegossen, abgespritzt oder ausgeschäumt. Nach einer ausreichenden Kühl- bzw. Aushärtephase wird die fertige Borstenware entnommen. Hierbei sind die Arbeitszyklen wegen der größeren Kunststoffmasse und der deshalb längeren Kühlzeit noch länger als bei den zuvor beschriebenen Schweiß- und Fügeverfahren. Hinzu kommt, daß die geradlinigen Borsten aufgrund ihrer kurzen Einspannlänge eine nur unzulängliche Ausreißfestigkeit besitzen. Es ist deshalb auch schon vorgeschlagen worden, die Borstenenden zunächst aufzuschmelzen und zu einem Kopf (DE-PS 845 933) oder sämtliche Borstenenden eines Borstenbesatzes zu einer Platte zu formen (DE-AS 10 50 304) und erst dann in den Kunststoff des Borstenträgers einzubetten. Damit werden zwar in gebrauchstechnischer Hinsicht bessere Produkte erhalten, die Zykluszeit aber weiter verlängert.

Um die Taktzeit zu beschleunigen, ist es bekannt (EP-OS 0 142 885), auf einem Drehtisch in mehreren Indexpositionen Borstenhalter in Form einer Vielzahl von Durchgangslöchern vorzusehen, in die die geschnittenen Borstenbündel eingeschoben, anschließend an ihrem rückwärtigen Ende bündig gestoßen, an ihrem befestigungsseitigen Ende zu einer Verdickung aufgeschmolzen, und schließlich mit der einen Hälfte eines Spritzgußwerkzeugs in Verbindung gebracht werden, deren andere Hälfte den ebenen Borstenhalter formen soll. Hier werden also die vorbereitenden Arbeiten an den Borsten an mehreren Stationen eines Drehtischs durchgeführt, an dessen letzter Station des Abspritzen in der Spritzgußform erfolgt. Gleichwohl ist auch hier noch eine vergleichsweise lange Zykluszeit durch das Abspritzen und das bis zum Aushärten notwendige Kühlen der Form gegeben. Auch die Abdichtung der Borstenbündel bzw. der Aufnahmelöcher gegenüber der Spritzgußmasse ist unzureichend, da einerseits die Borsten durch bloßes Einschieben in die Aufnahemlöcher nicht dicht genug gepackt werden können, andererseits zu Beginn des Einspritzens aufgrund des sich isostatisch aufbauenden Drucks, der auch hinter den Verdickungen an den Borstenenden wirkt, die Borsten in die Form hineingezogen werden und die Verdickungen von dem formseitigen Öffnungsrand der Aufnahmelöcher abgehoben werden. Die Folge ist, daß die Spritzgußmasse zwischen die Borsten selbst sowie zwischen diese und der Lochwandung eindringt. Dadurch ergibt sich ein unsauberer Abschluß am Borstenträger und es wird die im Gebrauch erwünschte Biegsamkeit der Borstenbündel ungünstig und ungleichmäßig beeinflußt.

Bei einem anderen bekannten Verfahren (DE-OS 29 22 877) wird gleichsam umgekehrt gearbeitet, indem auf einem Drehtisch an mehreren Indexpositionen je eine Spritzgußform angeordnet ist, die in einem Formteil Aufnahmeöffnungen für die Borsten aufweist. In der ersten Indexposition werden die zugeschnittenen Borsten mittels Ausstechröhrchen bündelweise aus einem Magazin entnommen und anschließend aus den Ausstechröhrchen in die Aufnahmelöcher der Spritzgußform eingeschoben. An der gleichen Station wird dann die Form abgespritzt und anschließend in eine Kühlstation weitergedreht. In einer weiteren Station erfolgt das Nachbearbeiten der Borsten an der geöffneten Form und schließlich wird die fertige Borstenware aus der Form entnommen. Mit diesem Verfahren ließe sich der Arbeitszyklus stärker verkürzen, da das Abspritzen und Kühlen auf verschiedene Stationen verteilt wird, doch gelingt dies deshalb nicht, weil wegen des zuvor geschilderten Problems der Abdichtung der Aufnahmelöcher besondere Maßnahmen ergriffen werden müssen, zumal die Borsten in den Aufnahmelöchern zwangsläufig relativ locker sitzen und ferner aufgrund des Einschiebens der Borsten unmittelbar in die Form Verdickungen an den Borstenenden nicht ausgebildet werden können. Es wird deshalb die Form in zwei Stufen abgespritzt, indem zunächst eine Teilmenge des Kunststoffs mit geringem Druck eingespritzt wird, bis die Borstenenden umhüllt sind. Nach dem Verfestigen dieser Schmelze wird dann in einer zweiten Stufe der verbliebene Hohlraum ausgefüllt. Dieses zweistufige Abspritzen mit einer Zwischenkühlphase ist technisch aufwendig und zeitraubend.

Der Erfindung liegt die Aufgabe zugrunde, die vorgenannten Verfahren durch Verkürzung der Taktzeit wirtschaftlicher zu gestalten und ferner Vorrichtungen zur Durchführung der Verfahren vorzuschlagen.

Diese Aufgabe wird erfindungsgemäß bei dem eingangs genannten Verfahren des Schweißens oder Fügens (DE-OS 28 08 965) gemäß Patentanspruch 1 dadurch gelöst, daß entweder die Klemmeinrichtungen mit den Borsten oder die Halter mit den Borstenträgern an einer Übergabestation zu Beginn einer Übergabe-, Füge- und Kühlstrecke von der einen auf die jeweils andere Bewegungsbahn verbracht und am Ende der Übergabe- und Kühlstrecke mit mehreren Kühlstationen die Borsten aus der Klemmeinrichtung gelöst und entweder Klemmeinrichtungen oder die Halter auf ihre jeweilige Bewegungsbahn zurückgeführt werden.

Vorzugsweise werden die Bewegungsbahnen der Klemmeinrichtungen und der Halter für die Borstenträger zumindest entlang der mehrere Stationen aufweisenden Übergabe-, Füge Kühlstrecke parallel und in gleicher Bewegungsrichtung geführt.

Dadurch, daß die jeweilige Halterung, nämlich entweder die Klemmeinrichtung für die Borsten oder der Halter für den Borstenträger an der Übergabestation zusammen mit den Borsten bzw. dem Borstenträger von der einen Bewegungsbahn auf die jeweils andere Bewegungsbahn übergeben wird, entfällt ein Umspannen od. dgl. und die Borsten bzw. der Borstenträger behalten auf der jeweils anderen Bewegungsbahn ihre exakte Position bei. Durch die parallele Anordnung der Bewegungsbahnen von Borsten und Borstenträger entlang der Übergabe-, Füge- und Kühlstrecke ist es möglich, unmittelbar nach Übergabe der Borsten an den Borstenträger oder umgekehrt den eigentlichen Füge- und Abkühlvorgang auf mehrere nachfolgende Stationen zu verteilen, so daß die bisher längste Taktzeit in mehrere Einzeltakte kürzerer Zeitdauer aufgegliedert wird. Am Ende der Übergabe- und Kühlstrecke werden die Klemmeinrichtungen gelöst, so daß die Borsten freikommen und in gegebenenfalls mehreren Stationen nachgearbeitet werden können. Werden die Klemmeinrichtungen von einer Bewegungsbahn auf die andere übergeben, so wandern sie unmittelbar nach Freigabe der Borsten wieder auf ihre Bewegungsbahn zurück, während die Halter für die Borstenträger vorzugsweise auch noch in den Nachbearbeitungsstationen zur Halterung der fertigen Borstenware dienen. Werden die Halter von der einen auf die andere Bewegungsbahn übergeben, so können die Stationen zur Nachbearbeitung an der einen oder anderen Bewegungsbahn vorgesehen sein.

In bevorzugter Ausführung werden die Klemmeinrichtungen mit den Borsten und die Halter mit den Borstenträgern auf dem gleichen Durchmesser von parallelen, gleichachsigen Kreisbahnen und an der Übergabestation achsparallel zwischen beiden bewegt.

Mit dieser Ausbildung lassen sich auf engem Raum sämtliche Bearbeitungs- bzw. Behandlungsvorgänge an den Borsten und am Borstenträger durchführen. Zugleich sind die Übergabewege für die Halter bzw. die Klemmeinrichtungen minimal. Da sich die Taktzeit der einzelnen Bearbeitungsvorgänge durch Mehrfach-Stationen minimieren lassen, hängt die Taktzeit selbst praktisch nur noch von der für die Übergabe notwendigen Zykluszeit ab. Statt der vorgenannten Ausführung ist es auch möglich, daß die Klemmeinrichtungen mit den Borsten und die Halter mit den Borstenträgern auf konzentrischen Kreisbahnen und an der Übergabestation radial zwischen beiden bewegt werden.

In weiterer Ausgestaltung des erfindungsgemäßen Verfahrens ist vorgesehen, daß die Borsten an einer ersten Station der ersten Bewegungsbahn achsparallel ausgerichtet einer geöffneten Klemmeinrichtung zugeführt, in diese eingespannt, gegebenenfalls auf ihrer weiteren Bewegungsbahn an mehreren Heizstationen zum Aufschmelzen ihrer die Klemmeinrichtung überragenden Enden und gegebenenfalls an einer Formstation zum Anformen einer Verdickung an den aufgeschmolzenen Borstenenden vorbeibewegt werden, während zugleich auf der zweiten Bewegungsbahn die Borstenträger achsparallel in einen Halter eingelegt, an ihrer Borsten-Aufnahmeseite bereichsweise aufgeschmolzen und/oder Aufnahmelöcher eingeformt werden, anschließend in der Übergabestation der Halter mit dem Borstenträger und der Borsten-Aufnahmeseite voraus auf die erste Bewegungsbahn übergeben, dort mit der Klemmeinrichtung unter Eindringen der Borstenenden in die Borsten-Aufnahmeseite des Borstenträgers verriegelt, in den folgenden Stationen die aus Halter und Klemmeinrichtung bestehende Einheit gekühlt wird, am Ende der Übergabe-, Füge- und Kühlstrecke die Vorrichtung gelöst und der Halter mit der fertigen Borstenware auf die zweite Bewegungsbahn zurückgeführt und die Borstenware aus dem Halter entnommen wird.

Ferner kann vorgesehen sein, daß nach dem Rückführen des Halters mit der fertigen Borstenware die freien Borstenenden an wenigstens einer weiteren Station nachgearbeitet, z. B. nachgeschnitten, gerundet werden od. dgl.

Zur Lösung der Erfindungsaufgabe bei dem anderen Verfahrenstyp des Einbettens der Borstenenden durch Spritzgießen oder Ausschäumen des Borstenträgers in einer die Borsten aufnehmenden Form geht die Erfindung mit dem Oberbegriff des Patentanspruch 7 aus von dem bekannten Verfahren (DE-OS 29 22 877), bei dem die Borsten in einer dem Borstenbesatz entsprechenden Anordnung und Anzahl in Aufnahmeöffnungen einer wenigstens zweiteiligen Form, in der der Borstenträger durch Spritzen oder Ausschäumen hergestellt wird, eingeführt werden und mehrere Formen auf einer geschlossenen Bewegungsbahn in Umlauf an einer den Kunststoff für den Borstenträger zuführenden Station, wenigstens einer Kühlstation und einer Entnahmestation für die fertige Borstenware vorbeigeführt werden.

Die Erfindungsaufgabe wird bei diesem Verfahren dadurch gelöst, daß die Borsten mittels einer die Aufnahmeöffnungen aufweisenden und ein Teil der Form bildenden Klemmeinrichtung erfaßt und mehrere Klemmeinrichtungen auf einer ersten Bewegungsbahn mit wenigstens einer Bearbeitungs- bzw. Behandlungsstation für die Borsten geführt werden und daß die Klemmeinrichtungen zusammen mit den Borsten an einer Übergabestation unter Vervollständigung der Form auf die zweite Bewegungsbahn übergeben, nach Passieren mehrerer Kühlstation an der letzten Kühlstation unter Freigabe der Borsten gelöst und nach der Entnahmestation auf die erste Bewegungsbahn zurückgeführt werden.

Auch bei dieser Lösung macht die Erfindung von dem Prinzip Gebrauch, daß die die Borsten aufnehmende Klemmeinrichtung von einer Bewegungsbahn, nämlich der ersten, auf der die Borsten vorbereitet und zugerichtet werden können, auf die andere Bewegungsbahn, nämlich die zweite mit den Spritzguß- oder Schäumformen übergeführt und dort über eine größere Strecke, die eine beliebige Zerlegung der Arbeitstakte für das Spritzen bzw. Schäumen und das Abkühlen gestattet, mitgeführt werden. Dabei werden die Borsten beim Einführen in die Klemmeinrichtung exakt positioniert, wie dies bei allen folgenden Arbeitszyklen notwendig ist. Erst nach Fertigstellung der Borstenware werden die Klemmeinrichtungen wieder auf die erste Bewegungsbahn zurückgeführt. Um dies zu ermöglichen, muß die Klemmeinrichtung ein Teil der wenigstens zweiteiligen Form bilden, nämlich das Abformen zumindest der Borsten-Aufnahmeseite des Borstenträgers übernehmen. Die Klemmeinrichtung gibt die Möglichkeit die Borsten problemlos in die geöffnete Einrichtung einzuführen und durch Schließen der Klemmeinrichtung fest und eng einzuspannen, so daß einerseits eine exakte und unveränderliche Positionierung gewährleistet ist, andererseis die Borsten dicht gepackt sind, so daß beim Abspritzen oder Einschäumen der Kunststoff nicht zwischen sie und die Aufnahmelöcher eindringen kann.

Die erfindungsgemäße Ausbildung gibt weiterhin die Möglichkeit, daß die die Borsten aufnehmenden Klemmeinrichtungen auf der ersten Bewegungsbahn an einer Zuführstation, in der die Borsten in die Klemmeinrichtung eingeführt werden, an wenigstens einer Heizstation, an der die befestigungsseitigen Enden der Borsten aufgeschmolzen werden, und einer Kühlstation vorbeigeführt werden, bevor sie in die Übergabestation gelangen, wobei ferner vorgesehen sein kann, daß die aufgeschmolzenen Borstenenden auf der ersten Bewegungsbahn in einer Formstation zwischen der Heizstation und der Kühlstation zu einem Kopf, einer Platte od. dgl. geformt werden.

Der Kopf bzw. die Platte können unmittelbar auf den Öffnungsrand der Aufnahmeöffnungen in der Klemmeinrichtung angeformt werden, so daß in Verbindung mit der Einspannung der Borsten eine einwandfreie Abdichtung gegenüber dem Formraum gegeben ist.

Schließlich kann die fertige Borstenware nach der Entnahmestation an einer oder mehreren Stationen einer weiteren Begungsbahn nachbearbeitet werden, z. B. können die Borsten nachgeschnitten, gerundet oder ausgeputzt werden.

Kunststoffborsten bieten die Möglichkeit vom Endlosstrang zu arbeiten. Diese Arbeitsweise läßt sich in das erfindungsgemäße Verfahren dadurch integrieren, daß bei der Verarbeitung der Borsten von einem Endlosstrang dieser mit seinem vorlaufenden Ende in die Klemmeinrichtung eingespannt und die Borsten in einem der gewünschten Länge zuzüglich der für ihre Befestigung erforderlichen Länge entsprechenden Abstand vom vorlaufenden Ende des Endlosstrangs abgelängt werden.

Zur Durchführung des Verfahrens nach dem Patentanspruch 1 geht die Erfindung aus von einer bekannten Vorrichtung (DE-OS 28 08 965) mit einer Transporteinrichtung mit einer kreisförmigen ersten Bewegungsbahn, die mehrere Stationen mit je einer Klemmeinrichtung für die Borsten aufweist und an deren erster Station eine Zuführeinrichtung für die Borsten in die Klemmeinrichtung, an gegebenenfalls weiteren Stationen eine Heizeinrichtung für das Aufschmelzen und Formen der Borstenenden angeordnet und an einer weiteren Station die Übergabe der Borsten auf eine zweite kreisförmige Bewegungsbahn einer Transporteinrichtung vorgesehen ist, die ihrerseits mehrere Stationen mit je einem Halter für den Borstenträger aufweist und an deren erster Station die Zuführung der Borstenträger in die Halter, an einer weiteren Station das Aufschmelzen der Borsten-Aufnahmeseite mittels einer Heizeinrichtung und/oder das Einformen von Borsten-Aufnahmelöchern erfolgt.

Diese bekannte Vorrichtung wird zur Lösung der Erfindungsaufgabe gemäß dem Kennzeichen des Patentanspruchs 12 derart ausgebildet, daß die erste und die zweite Kreisbahn gleichachsig angeordnet und die Transporteinrichtungen gleichsinnig angetrieben sind, und daß hinter den Stationen mit der Heizeinrichtung mehrere Stationen einer Übergabe-, Füge- und Kühlstrecke angeordnet sind, an deren erster eine Einrichtung zur Übergabe der Halter mit dem Borstenträger oder der Klemmeinrichtungen mit den Borsten auf die jeweils andere Kreisbahn angeordnet ist, und daß an dieser Kreisbahn eine Spanneinrichtung vorgesehen ist, mittels der der Borstenträger und die in der Klemmeinrichtung befindlichen Borsten zusammengehalten werden und an deren folgenden Stationen eine Kühleinrichtung für die Borsten und den Borstenträger und eine Übergabe für die Rückfürung der Klemmeinrichtungen oder der Halter auf ihre jeweilige Kreisbahn angeordnet ist.

Die beiden gleichachsigen Kreisbahnen können in Horizontalebenen übereinander oder vertikal nebeneinander angeordnet sein und beanspruchen auf diese Weise einen geringstmöglichen Raum. Für die Übergabe der Klemmeinrichtung mit den Borsten von der ersten Kreisbahn auf die zweite bzw. für die alternativ mögliche Übergabe der Halter mit den Borstenträgern auf die erste Kreisbahn mit den Klemmeinrichtungen braucht lediglich der zwischen den beiden Kreisbahnen vorhandene Abstand überwunden werden. Ferner braucht für beide Kreisbahnen nur ein Antrieb vorgesehen werden.

Gemäß einem Ausführungsbeispiel bestehen die Transporteinrichtungen aus je einem Revolverteller, die auf Kreisbahnen gleichen Durchmessers die Klemmeinrichtungen für die Borsten bzw. die Halter für die Borstenträger aufweisen und die achsgleich angeordnet und gleichsinnig angetrieben sind und daß die Übergabeeinrichtung für die Klemmeinrichtungen oder für die Halter achsparallel zwischen beiden Revolvertellern beweglich ist. Um den Abstand zwischen den beiden Kreisbahnen zu minimieren, werden die Bearbeitungsvorgänge vorzugsweise an den in die gleiche Richtung weisenden Stirnseiten durchgeführt, so daß zwischen die Revolverteller nur die Bearbeitungswerkzeuge für den einen Revolverteller eingreifen. Die Heiz- und Kühleinrichtungen, wie auch die Spanneinrichtungen zum Zusammenhalten von Borstenträger und Klemmeinrichtung können ortsfest angeordnet sein, so daß die Klemmeinrichtungen bzw. die Borsten einerseits und die Halter bzw. Borstenträger andererseits an ihnen vorbeilaufen. Statt dessen können sie aber auch in dem notwendigen Umfang an den Stationen mitführbar und rückführbar sein.

Statt dessen kann vorgesehen sein, daß die Transporteinrichtungen von einem einzigen Revolverteller gebildet sind, der auf Kreisbahnen verschiedenen Durchmessers die Klemmeinrichtungen für die Borsten bzw. die Halter für die Borstenträger aufweist, und daß die Übergabeeinrichtung zwischen beiden Kreisbahnen radial beweglich ist. Auf diese Weise lassen sich alle Arbeitsgänge in einer Ebene bei kürzesten Stellwegen durchführen.

Gemäß einem Ausführungsbeispiel der Erfindung sind dem Revolverteller mit den Borsten-Klemmeinrichtungen eine oder mehrere Formeinrichtungen zugeordnet, die zwischen der letzten Station mit einer Heizeinrichtung für die Borstenenden und der Übergabestation angeordnet sind und mittels der die aufgeschmolzenen Borstenenden zu einem Kopf, einer Platte od. dgl. umgeformt werden. Dies empfiehlt sich insbesondere dann, wenn die Borsten und die Borstenträger aus Kunststoffen bestehen, die nicht miteinander verschweißbar sind. Hierbei wird die Verdickung in den weichplastischen Kunststoff des Borstenträgers eingedrückt und von diesem hinterflossen, so daß eine formschlüssige Verankerung gegeben ist. Bei verschweißbaren Kunststoffen ist das Formen oder Nachformen der sich beim Aufschmelzen bildenden Verdickung am Borstenende im allgemeinen entbehrlich.

Gemäß einem weiteren Ausführungsbeispiel ist vorgesehen, daß zwischen der letzten Station der Übergabe-, Füge- und Kühlstrecke und einer Abnahmestation für die fertige Borstenware wenigstens eine weitere Station zum Nacharbeiten der freien Borstenenden, z. B. zum Nachschneiden, Runden od. dgl., angeordnet ist.

Ferner kann vor der Heizeinrichtung zum Aufschmelzen der Borstenenden eine Einrichtung vorhanden sein, mittels der das Borstenbündel am Nutzungsende der Borsten konturiert wird. Dieser auch als Schüsseln bezeichnete Vorgang erfordert ein Lösen der Klemmeinrichtung, um die Borsten axial verschieben zu können.

Wenn, wie vorzugsweise vorgesehen, die Halter mit den Borstenträgern auf den anderen Revolverteller überführbar sind, sitzt die an der Übergabestation angeordnete Spanneinrichtung zum Zusammenhalten von Borstenträger mit den in der Klemmeinrichtung sitzenden Borsten auf der Übergabe- und Kühlstrecke auf der Kreisbahn mit den Klemmeinrichtungen. Auch diese Spanneinrichtungen können gegebenenfalls nur über die notwendige Anzahl von Stationen mitbewegbar und im übrigen rückführbar sein.

Die Heizeinrichtungen für die Borsten sind vorzugsweise ortsfest an der Vorrichtung angeordnet und sie erstrecken sich mit Vorteil über mehrere Stationen. Die Borsten werden also mittels des Revolvertellers an den ortsfesten Heizeinrichtungen vorbeibewegt.

Ist eine Formeinheit für die aufgeschmolzenen Borstenenden vorgesehen, so erstreckt sich diese über mehrere Stationen und ist im übrigen ortsfest, jedoch achsparallel verschiebbar angebracht und um jeweils eine Station mit dem Revolverteller mitbewegbar und rückführbar ausgebildet.

Schließlich ist erfindungsgemäß vorgesehen, daß eine zwischen beiden Kreisbahnen an oder vor der Übergabestation wirksame Wendeeinrichtung für die Halter bzw. die Borstenträger oder für die Klemmeinrichtungen mit den Borsten mittels der die befestigungsseitigen Borstenenden und die Borsten-Aufnahmeseite des Borstenträgers einander zugekehrt werden. Diese Wendeeinrichtung kann sowohl bei konzentrisch als auch bei in parallelen Ebenen angeordneten Kreisbahnen vorgesehen sein. Werden - wie dies vorzugsweise der Fall ist - Borsten vom Endlosstrang verarbeitet, so ist erfindungsgemäß vorgesehen , daß die Borsten-Zuführeinrichtung aus einer achsparallel zum Revolverteller verschieblichen Spanneinrichtung besteht, die den Endlosstrang am vorlaufenden Ende mit einem etwa der gewünschten Borstenlänge entsprechenden Überstand erfaßt und in die Klemmeinrichtung soweit einschiebt, daß die Borsten an der gegenüberliegenden Seite um das für ihre Befestigung am Borstenkörper notwendige Maß vorragen, und daß der Spanneinrichtung eine an ihre vorderen Stirnseite wirksame Schneideinrichtung zugeordnet ist, die nach dem Lösen und Zurückfahren der Spanneinrichtung in die Ausgangslage, die von der Klemmeinrichtung erfaßten Borsten auf Wunschmaß ablängt.

In diesem Fall werden die Borsten von einer Seite dem Revolverteller zugeführt und durch die Klemmeinrichtung hindurchgeschoben, so daß sie mit ihrem Ende die gegenüberliegende Seite des Revolvertellers überragen und dort aufgeschmolzen und gegebenenfalls nachgeformt werden können. Soll die Bearbeitung bzw. Behandlung der Borstenenden an der Zuführseite des Revolvertellers erfolgen - beispielsweise dann, wenn die Klemmeinrichtungen auf den anderen Revolverteller überführbar sind - werden die Borsten mittels der Spanneinrichtung soweit in die Klemmeinrichtung eingeschoben, bis die vordere Stirnseite der Spanneinrichtung einen Abstand von der ihr zugekehrten Stirnseite der Klemmeinrichtung bzw. des Revolvertellers aufweist, so daß die Borsten an dieser Seite den für das Aufschmelzen und gegebenenfalls Anformen notwendigen Überstand aufweisen.

Mit Vorteil weisen die die Borsten zuführende Spanneinrichtung und die Borsten-Klemmeinrichtungen auf dem Revolverteller ineinander greifende Zentrierungen auf, um ein einwandfreies Einführen der Borsten mittels der Spanneinrichtung in die Klemmeinrichtungen zu gewährleisten.

Zur Durchführung des des Verfahrens nach dem Patentanspruch 7, bei dem die Borstenenden in den Borstenträger durch Spritzen oder Ausschäumen eingebettet werden, geht die Erfindung von einer bekannten Vorrichtung aus (DE-OS 29 22 877) mit einer Transporteinrichtung mit kreisförmiger Bewegungsbahn, die mehrere Stationen mit je einer wenigstens zweiteiligen Spritzguß- oder Schäumform für den Borstenträger mit Aufnahmeöffnungen für die Borsten aufweist und an deren erster Station eine Zuführeinrichtung für die Borsten angeordnet ist und die eine Station für das Zuführen des Kunststoffs zur Spritzguß- oder Schäumform, wenigstens eine Kühlstation und eine Entnahmestation für die fertige Borstenware aufweist.

Diese bekannte Vorrichtung zeichnet sich erfindungsgemäß dadurch aus, daß eine erste Transporteinrichtung mit mehreren Klemmeinrichtungen für die Borsten und wenigstens einer Bearbeitungs- oder Behandlungsstation für dieselben zwischen der Zuführeinrichtung und der zweiten Transporteinrichtung mit den Spritzguß- oder Schäumformen vorgesehen ist, und daß jede Klemmeinrichtung die Aufnahmeöffnungen, in denen die Borsten in der dem Borstenbesatz entsprechenden Zahl und Anordnung und mit einer für die Befestigung im Borstenträger notwendigen freien Länge klemmend gehalten sind, aufweist und ein Teil der wenigstens zweiteiligen Spritzguß- oder Schäumform bildet, daß zwischen den beiden Transporteinrichtungen eine Übergabeeinrichtung zum Einsetzen der Klemmeinrichtung in die offene Spritzguß- oder Schäumform angeordnet ist und daß an oder hinter der Entnahmestation der zweiten Transporteinrichtung eine Einrichtung zum Zurückführen der von den Borsten gelösten Klemmeinrichtungen zur ersten Transporteinrichtung vorgesehen ist.

Im Gegensatz zum vorgenannten Stand der Technik weist nicht eines der Formteile einfache Aufnahmeöffnungen auf, sondern sind diese an einer die Borsten einspannenden Klemmeinrichtung vorgesehen, die eine exakte Positionierung der Borsten und beliebige Vorarbeiten oder Vorbehandlungen an den Borsten gestattet und ferner an der Übergabestation in die Form auf der anderen Bewegungsbahn integriert wird, wo sie dann ein Teil dieser Form bildet. Die Klemmeinrichtungen laufen also auch hier von der Borsten-Zuführeinrichtung bis zum Anfall der fertigen Borstenware mit um.

Vorzugsweise sind beide Transporteinrichtungen als Revolverteller ausgebildet, die eine gemeinsame Übergabestation mit der Übergabeeinrichtung für die Klemmeinrichtungen aufweisen.

Mit Vorteil ist an der ersten Transporteinrichtung mit den Klemmeinrichtungen wenigstens eine Station mit einer Heizeinrichtung zum Aufschmelzen der freien Borstenenden angeordnet. Es werden also vor dem Einführen in die Form die Borsten an ihren Enden verschmolzen und können gegebenenfalls an einer weiteren Station mittels einer Formeinrichtung zu einem Kopf oder einer Platte geformt werden, um eine einwandfreie Abdichtung der Form und eine feste Verankerung der Borsten im Borstenträger zu erhalten.

Gemäß einem Ausführungsbeispiel besteht die Spritzguß- oder Schäumform aus zwei Formteilen, die zwischen sich die Formtrennebene bilden und von denen das auswerferseitige Formteil von der Klemmeinrichtung gebildet ist. Diese Ausführung empfiehlt sich insbesondere für solche Borstenwaren, bei denen der Umriß des Borstenträgers etwa dem Umriß des Borstenbesatzes entspricht und der Borstenträger unmittelbar als Handhabe beim Gebrauch dient, z. B. bei Handwasch- und Reinigungsbürsten.

Gemäß einem anderen Ausführungsbeispiel ist vorgesehen, daß die Spritzguß- oder Schäumform aus drei Formteilen besteht, von denen zwei Formteile auf der Auswerferseite sich zu einer auswerferseitigen Formeinheit ergänzen und eines hiervon die Klemmeinrichtung ist. Diese Ausführung empfiehlt sich beispielsweise bei allen Stielbürsten, wie Zahnbürsten, Spülbürsten od. dgl. Hierbei wird der gesamte Bürstenkörper (Borstenträger und Stiel) durch zwei Formteile und lediglich die Borsten-Aufnahmeseite des Borstenträgers von der Klemmeinrichtung abgeformt. Die letztgenannte Ausführung zeichnet sich weiterhin dadurch aus, daß die Klemmeinrichtung in dem anderen auswerferseitigen Formteil zwischen einer die auswerferseitige Formeinheit im Betriebszustand bildenden Position und einer Position verschiebbar ist, in der die Klemmeinrichtung in der Übergabestation in die Form einsetzbar bzw. aus dieser entnehmbar ist. Die Form weist also faktisch zwei Formtrennebenen auf, nämlich einerseits die Haupttrennebene zwischen auswerferseitiger Formeinheit und dem düsenseitigen Formteil, andererseits eine Trennebene zwischen den beiden die auswerferseitige Formeinheit bildenden Formteile, von denen eines die Klemmeinrichtung ist. Diese zweite Trennebene ermöglicht das Einsetzen und Zurückführen der Klemmeinrichtung.

Gemäß einem weiteren Ausführungsbeispiel ist vorgesehen, daß an der Spritzguß- oder Schäumform eine Einrichtung zum Lösen der Klemmeinrichtung bei Beginn des Entformungsvorgangs angeordnet ist. Die Borsten verbleiben solange in der Klemmeinrichtung, bis der Borstenträger ausreichend abgekühlt ist, um ihn ausformen zu können. Dann wird die Klemmeinrichtung gelöst, so daß sie während des Entformungshubs der auswerferseitigen Formeinheit von den Borsten abgezogen wird.

Sollen die Borsten vom Endlosstrang verarbeitet werden, so ist erfindungsgemäß vorgesehen, daß die Borsten-Zuführeineinrichtung aus einer achsparallel zum Revolverteller verschieblichen Spanneinrichtung besteht, die den Endlosstrang am vorlaufenden Ende mit einem etwa der gewünschten Borstenlänge entsprechenden Überstand erfaßt und in die offene Klemmeinrichtung soweit einschiebt, daß die Borsten an der gegenüberliegenden Seite um das für ihre Befestigung am Borstenträger notwendige Maß vorragen, und daß der Spanneinrichtung eine an ihrer vorderen Stirnseite wirksame Schneideinrichtung zugeordnet ist, die nach dem Lösen und Zurückfahren der Spanneinrichtung in die Ausgangslage die von der Klemmeinrichtung erfaßten Borsten auf Wunschmaß ablängt.

Nachstehend ist die Erfindung anhand von in der Zeichnung wiedergebenen Ausführungsformen der Vorrichtungen beschrieben. In der Zeichnung zeigen:
- Figur 1: eine schematische Seitenansicht der Vorrichtung mit zwei Revolvertellern;
- Figur 2: eine Draufsicht auf die Darstellung gemäß Figur 1;
- Figur 3: eine schematische Ansicht der einzelnen Arbeitsschritte, und zwar in Figur 3a auf der Borstenseite und in Figur 3b auf der Borstenträger-Seite;
- Figur 4: ein schematisches Diagramm der Arbeitstakte auf der Borsten-Seite;
- Figur 5: ein schematisches Diagramm der Arbeitstakte auf der Borstenträger-Seite;
- Figur 6: eine der Figur 2 ähnliche Ansicht einer anderen Ausführungsform mit Spritzgußformen und
- Figur 7: eine schematische Ansicht einer einzelnen Spritzgußform.

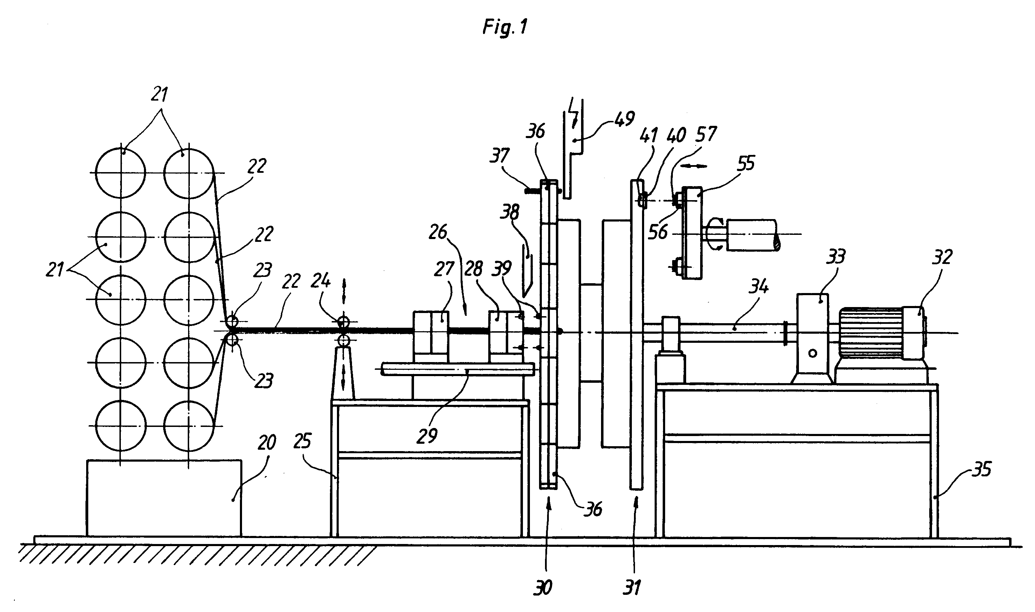

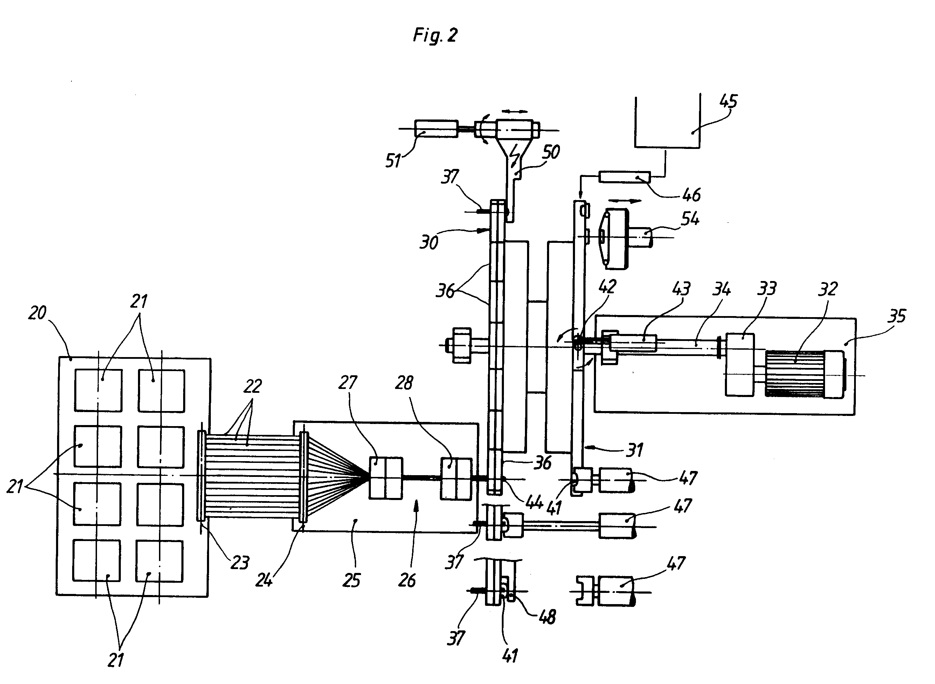

Die in den Figuren 1 und 2 gezeigte Vorrichtung weist ein Spulengestell 20 mit mehreren nebeneinander und übereinander angeordneten Spulen 21 auf, auf denen sich je ein Endlosstrang 22 aus Monofilen befindet. Die Endlosstränge 22 werden über Umlenkwalzen 23 von zwei übereinander liegenden Transportwalzen 24 abgezogen. Die Transportwalzen 24 sitzen auf einem Gestell 25, auf dem ferner eine Zuführeinrichtung 26 mit zwei hintereinander angeordneten Spanneinrichtungen 27, 28 sitzt. In der Zeichnung ist der Einfachheit wegen die Zusammenführung mehrerer monofiler Endlosstränge 22 zu einem oder mehreren Borstenbündeln gezeigt. Statt dessen können auch, wie bereits gesagt, die Endlosstränge aus Bündeln gebildet sein, die dann jeweils ein Borstenbündel bilden.

Die beiden Spanneinrichtungen 27, 28 der Zuführeinrichtung 26 sind auf einem Schiebetisch 29 gegeneinander verschiebbar, wobei die Spanneinrichtung 27 im geschlossenen Zustand den Borstenstrang erfaßt und durch Verfahren auf dem Schiebetisch 29 in die offene Spanneinrichtung 28 einschiebt. Diese wiederum erfaßt nach dem Schließen den Endlosstrang und führt ihn dem vor dem Gestell 25 angeordneten Revolverteller 30 zu. Gleichachsig mit dem Revolverteller 30 und parallel zu diesem ist ein weiterer Revolverteller 31 angeordnet, die gemeinsam von einem Antriebsmotor 32 über ein Getriebe 33 und eine Welle 34 angetrieben werden. Der Antriebsmotor 32 und das Getriebe 33 sitzen auf einem weiteren Maschinengestell 35.

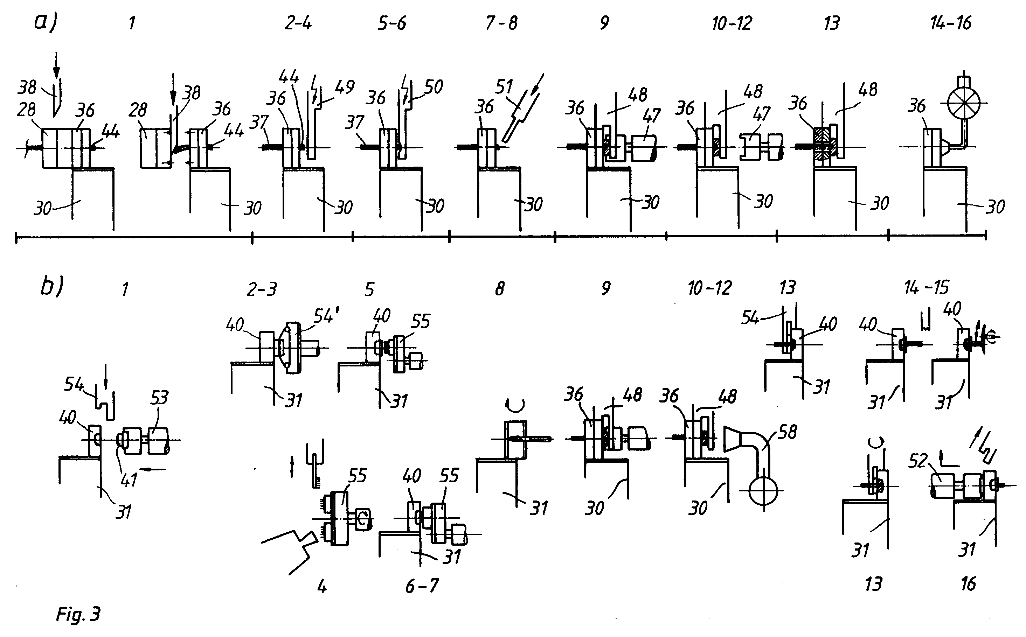

Auf dem Revolverteller 30 sind eine Vielzahl von Klemmeinrichtungen 36 fest angeordnet, die eine der Anzahl der Aufnahmen an den Spanneinrichtungen 27, 28 entsprechende Anzahl von Aufnahmen für ein oder mehrere Borstenbündel aufweisen. Die Klemmeinrichtungen 36 sind zwischen einer offenen Stellung, in der die Spanneinrichtung 28 den Borstenstrang einführt und einer geschlossenen Stellung, in der sie das oder die Borstenbündel 37 fest umschließen, beweglich. Der Spanneinrichtung 28 ist eine Schneideinrichtung 38 (Figur 1) zugeordnet, die nach Einführen des Endlosstrangs in die gegenüberliegende Klemmeinrichtung und nach Zurückfahren der Spanneinrichtung 28 in die in Figur 1 und 2 dargestellte Position ein Borstenbündel gewünschter Länge von dem Endlosstrang abschneidet. Um ein einwandfreies Überführen des Borstenstrangs aus der Spanneinrichtung 28 in die Klemmeinrichtungen 36 zu gewährleisten, sind an beiden Zentrierungen 39 vorgesehen. Nach Ablängen des Endlosstrangs mittels der Schneideinrichtung 38 kann der Revolverteller 30 durch die verschiedenen Arbeitsstationen, die anhand der Figur 3 noch beschrieben werden, getaktet werden.

Der andere Revolverteller 31 weist an der der Borsten-Zuführseite abgekehrten Seite eine Mehrzahl von Haltern 40 zur Aufnahme je eines Borstenträgers 41 auf. Die Halter 40 sind zusammen mit dem Borstenträger um eine etwa in Radialrichtung verlaufende Achse 42 (siehe Figur 2) mittels einer von außen angreifenden Wendeeinrichtung 43 um 180 Grad schwenkbar derart, daß die nach dem Einsetzen des Borstenträgers in den Revolverteller 31 zunächst nach rechts weisende Borsten-Aufnahmeseite in eine Position gebracht werden kann, in der sie dem Revolverteller 30 bzw. den die Klemmeinrichtungen 36 überragenden Enden 44 der Borstenbündel 37 zugekehrt sind. Eine weitere Wendeeinrichtung 43 befindet sich an anderer Position des Drehtellers 31, um die Halter 40 für die Borstenträger in ihre Ausgangsposition zurückzudrehen.

Die Borstenträger sind in einem Magazin 45 (Figur 2) gelagert, aus dem sie entnommen und mittels einer Einrichtung 46 in die Halter 40 am Revolverteller 31 eingelegt werden.

Die Halter 40 für die Borstenträger 41 sind weiterhin achsparallel verschieblich und können mittels eines Druckmittel-Zylinders 47 vom Revolverteller 31 zum Revolverteller 30 verfahren werden, wie dies in der unteren Hälfte der Figur 2 angedeutet ist. Bei dieser Verschiebung wird der Borstenträger 41 auf die Borstenenden 44 der Borstenbündel 37 aufgedrückt und nach Zurückfahren des Kolbens des Druckmittel-Zylinders 47 mittels einer Spanneinrichtung 48 in festem Kontakt mit dem Borstenbündel 37 bzw. dessen Enden 44 gehalten.

Nachstehend ist anhand der Figuren 3a und b die Taktfolge beschrieben, wobei in der oberen Reihe (Figur 3a) die Arbeitsschritte an dem die Borsten aufnehmenden Revolverteller 30, in der unteren Reihe (Figur 3b) die Arbeitsschritte an dem die Borstenträger aufnehmenden Revolverteller 31 wiedergegeben sind. Es sind insgesamt 16 Arbeitstakte gezeigt, die mit durchgehenden Ziffern 1 bis 16 bezeichnet sind. Im ersten Takt 1 wird der Borstenstrang mittels der Spanneinrichtung 28 in die offene Klemmeinrichtung 36 am Revolverteller 30 soweit eingeführt, daß das vorlaufende Ende 44 die vordere Stirnseite der Klemmeinrichtung 36 überragt. Die Klemmeinrichtung fährt in die Schließstellung, so daß der Borstenstrang fixiert ist, während die geöffnete Spanneinrichtung 28 in die Ausgangslage gemäß Figur 1 und 2 zurückfährt. Anschließend wird mittels der Schneideinrichtung 38 der Borstenstrang abgelängt, so daß sich in der Klemmeinrichtung 36 ein oder mehrere Borstenbündel 37 der gewünschten Länge befinden. In den nächsten drei Arbeitstakten 2 bis 4 passieren die Bündelenden 44 eine Heizeinrichtung 49, z. B. einen Heizspiegel, mittels dessen die Borstenenden 44 aufgeschmolzen und miteinander verschweißt werden. Die Heizeinrichtung 49, die sich über die Arbeitstakte 2 bis 4 erstreckt, kann ortsfest angeordnet sein.

In den beiden folgenden Arbeitstakten 5 und 6 werden die aufgeschmolzenen Borstenenden mittels einer Formeinheit 50 zu einer definierten Kontur umgeformt. Diese Formeinheit 50 kann, wie insbesondere aus Figur 2 ersichtlich, mittels eines Stellzylinders 51 achsparallel verschoben werden, um sie an die Borstenenden heranzubringen bzw. wegzuführen. Auch die Formeinheit 50 ist zweckmäßigerweise ortsfest angebracht, wird jedoch vorzugsweise über die beiden Arbeitstakte 5 und 6 mit dem Revolverteller 30 mitgeführt.

Im Anschluß an die Formeinheit 50 können die geformten Borstenenden 44 eine Kühleinrichtung 51 passieren, um eine formstabile Kontur zu erhalten. Dies ist insbesondere dann zweckmäßig, wenn Borsten und Borstenträger aus nicht verschweißbaren Kunststoffen bestehen und die Borstenenden 44 in die weichplastische Aufnahmeseite des Borstenträgers eingebettet werden.

In der Station 9 wird der zuvor auf dem Revolverteller 31 gewendete Borstenträger mittels des Druckmittel-Zylinders 47 von dem Revolverteller 31 auf den Revolverteller 30 überführt und dort mittels der Spanneinrichtung 48 (siehe auch Figur 2) mit der Klemmeinrichtung 36 verriegelt. In dieser Position bzw. in den Arbeitstakten 10 bis 12 werden der Borstenträger 41 und die Borstenenden 44 miteinander verpreßt, gegebenenfalls die zuvor weichplastische Borsten-Aufnahmeseite nachgeformt und ferner ausgekühlt. In der Station 13 schließlich wird die Klemmeinrichtung 36 geöffnet und der Borstenträger 41 mit den daran befestigten Borstenbündeln 37 auf den Revolverteller 31 zurückgeführt, wo gegebenenfalls die im unteren Teil (Figur 3b) wiedergegebene Nachbearbeitung in den Stationen 14 und 15 erfolgt, wobei in Station 14 ein Nachschneiden und in Figur 15 ein Zurichten der Borstenenden, z. B. ein Abrunden, gezeigt ist. Schließlich wird die fertige Bürste in der Station 16 mittels eines Druckmittel-Zylinders 52 entnommen. Auf dem Revolverteller 30 kann in den Stationen 14 bis 16 die Klemmeinrichtung an der Arbeitsseite von anhaftenden Kunststoffresten und/oder hängengebliebenen Einzelborsten gereinigt werden.

Die Arbeitsschritte auf dem Revolverteller 31 sind in Figur 3b gezeigt. Die Borstenträger 41 werden mittels eines Manipulators 53 od. dgl. in die Halter 40 eingelegt und dort mittels eines Riegels 54 od. dgl. gehalten. Aus der Zuführstation 1 gelangen die Halter 40 mit den Borstenträgern 41 in die Stationen 2 und 2, in der ein über diese Stationen mitlaufendes Druck-oder Prägeaggregat 54′ an einem Stiel des Borstenträgers eine Kennzeichnung od. dgl. anbringt. Die Borstenträger 41 gelangen dann mittels des Revolvertellers 31 in die Station 6, an der eine Heizeinrichtung 55 ortsfest angeordnet ist, die jedoch über die Stationen 4 bis 7 mitführbar bzw. rückführbar ist. Beim gezeigten Ausführungsbeispiel weist die Heizeinrichtung 55 einen Heizspiegel 56 und mehrere Heizstifte 57 (Figur 1) auf, mittels der in die Borsten-Aufnahmeseite des Borstenträgers 41 zugleich Sacklöcher eingeformt werden können, wie dies in den Stationen 5 und 6 gezeigt ist. Die Heizeinrichtung 55, die zwei oder drei Heizspiegel 56 mit Heizstiften 57 aufweist, ist aus der Position 6 in die Position 4 rückführbar, in der die Stifte und die Heizeinrichtung mechanisch und/oder pneumatisch gereinigt werden.

Das Aufschmelzen der Borsten-Aufnahmeseite des Borstenträgers 41 und das Prägen der Aufnahmelöcher für die Borstenbündel kann sich über die Stationen 5 bis 7 erstrecken. Dies hängt im Einzelfall von der Größe der Besteckungsfläche etc. ab. In der Station 8 wird der Borstenträger um 180 Grad gewendet und in Station 9 mittels des Druckmittel-Zylinders 47 vom Revolverteller 31 auf den Revolverteller 30 übergeben und dort mittels der Spanneinrichtung 48 in festem Kontakt mit den Borstenenden gehalten, wie dies bereits mit Bezug auf Figur 3a beschrieben wurde. In den Stationen 10 bis 12, in denen der Borstenträger mit den Borsten verpreßt und abgekühlt wird, kann die Rückseite des Borstenträgers mittels einer Warmlufteinrichtung 58 gegebenenfalls aufgewärmt werden, um den Schrumpfvorgang auf der Borsten-Aufnahmeseite auszugleichen und ein Verziehen des Borstenträgers 41 zu vermeiden. In der Station 13 wird der Halter 40 von der Klemmeinrichtung 36 abgezogen, wobei der Borstenträger vom Riegel 54 gehalten ist. Anschließend wird der Borstenträger mit dem Halter 40 vom Revolverteller 30 auf den Revolverteller 31 zurückgeführt und dort gewendet, wie dies in der unteren Darstellung der Position 13 gezeigt ist. Daraufhin erfolgt dann die bereits beschriebene Nachbearbeitung in den Stationen 14, 15 und schließlich die Entnahme in Station 16.

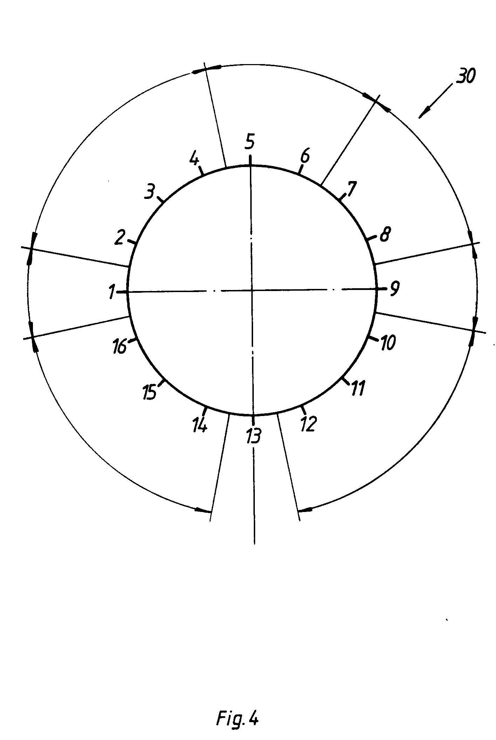

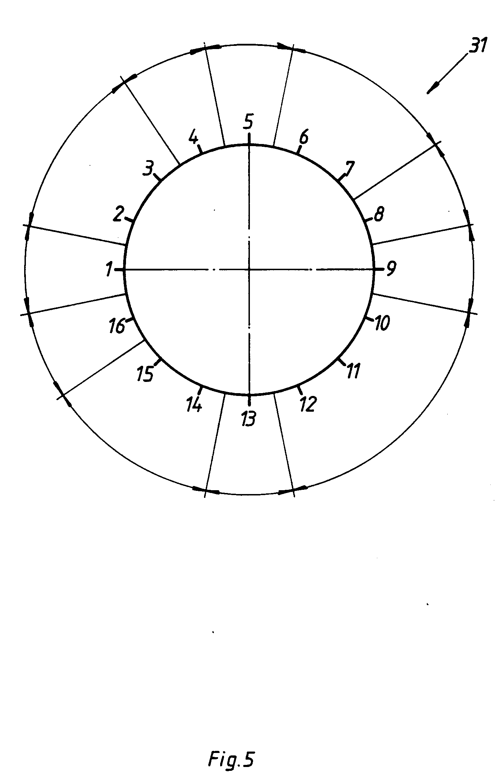

Die in den Figuren 3a und 3b beschriebenen Arbeitstakte auf der Borsten- und der Borstenträger-Seite sind in den Figuren 4 und 5 anhand eines Kreisdiagramms nochmals schematisch gezeigt. Figur 4 zeigt eine Ansicht auf den Revolverteller 30, in dessen Station 1 die Zuführung der Borsten erfolgt, während in den Folgestationen 2 bis 4 die Borstenenden aufgeschmolzen und in den Stationen 5 und 6 geformt werden. In den Stationen 7 und 8 erfolgt das Kühlen des gebildeten Borstenkopfs, während in Station 9 Borstenträger und Borsten zusammengeführt und miteinander verspannt werden. In den Stationen 10 bis 12 werden Borstenträger und Borsten in Kontakt zueinander gehalten und in der Position 13 schließlich die Klemmeinrichtung gelöst und der Borstenträger mit den Borsten auf den Revolverteller 31 überführt. In den Stationen 14 bis 16 wird die Klemmeinrichtung gereinigt.

Figur 5 zeigt das Ablaufdiagramm am Revolverteller 31. In der Position 1 werden die Borstenträger in die Halter am Revolverteller 31 eingelegt, in denen Stationen 2 und 3 der Borstenträger gegebenenfalls bedruckt bzw. geprägt, in der Station 4 wird die zurücklaufende Heiz- und Lochpräge-Einrichtung gereinigt. In den Stationen 5, 6, gegebenenfalls auch noch 7 wird die Borsten-Aufnahmeseite des Borstenträgers in den weichplastischen Zustand überführt und werden gegebenenfalls zusätzlich Aufnahmelöcher eingeformt. In der Position 8 wird der Borstenträger gewendet und vom Revolverteller 31 auf den Revolverteller 30 übergeben und mit den Borstenenden in Kontakt gebracht. Während dieser Kontaktzeit, die sich auf dem Revolverteller 30 über die Stationen 9 bis 12 erstreckt, weist der Revolverteller 31 Leertakte auf. In der Position 13 wird der Borstenträger mit den an ihm befestigten Borsten auf den Revolverteller 31 zurückgeführt und dort in den Stationen 14 und 15 endbearbeitet. In der Station 16 schließlich wird der Borstenträger aus dem Halter am Revolverteller 31 entnommen.

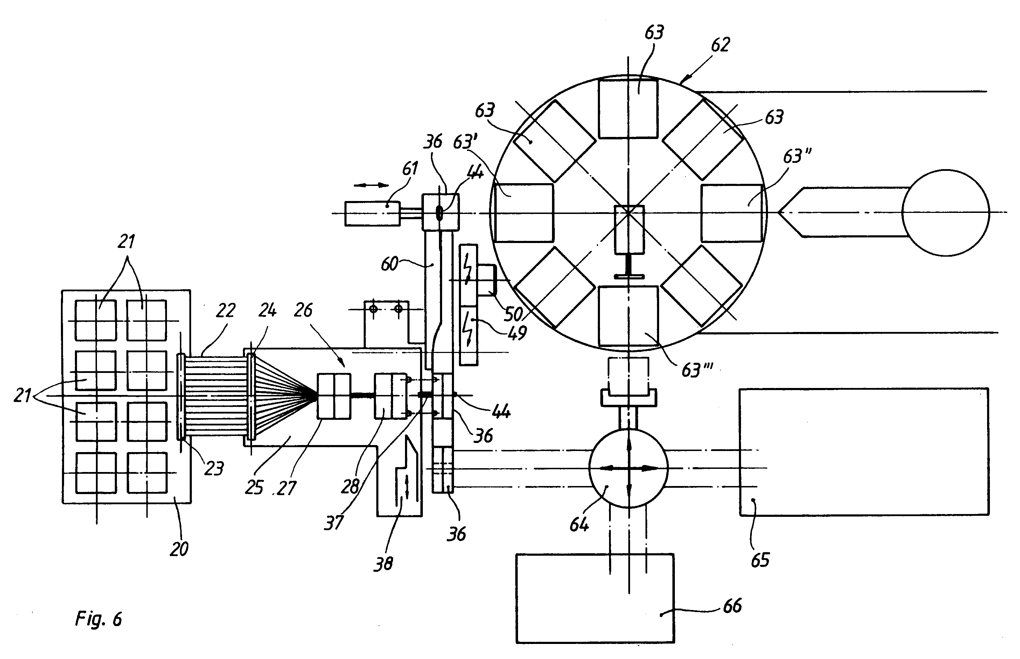

Bei dem Ausführungsbeispiel gemäß Figur 6 sind das Spulengestell und die Borsten-Zuführeinrichtung in gleicher Weise ausgebildet wie bei der Ausführungsform gemäß Figuren 1 und 2, weshalb hier auf eine erneute Beschreibung verzichtet werden kann. Auch hier sitzen wieder mehrere Klemmeinrichtungen 36 auf einem Revolverteller 60, sind hier aber lösbar mit ihm verbunden. Nach Einführen der Borsten in die an der Zuführeinrichtung 25 befindliche Klemmeinrichtung 36 werden die Borstenenden 37 mittels der Schneideinrichtung 38 an ihrem nachlaufenden Ende zugeschnitten, während sie mit ihrem vorlaufenden Borstenende 44 die Klemmeinrichtung 36 nach vorne überragen. Nach ein oder mehr Schaltschnitten erreichen sie eine Heizeinrichtung 49 und anschließend eine Formeinrichtung 50, in der die aufgeschmolzenen Borstenenden 44 zu einem Kopf geformt werden. Hieran schließt sich gegebenenfalls eine nicht gezeigte Kühleinrichtung an. vor oder in der Übergabestation mit der achsparallel wirkenden Übergabeeinrichtung 61 werden die Klemmeinrichtungen 36 um 90 Grad gedreht, so daß sie in einer Horizontalebene liegen.

Auf einem horizontalen Drehtisch 62 sind mehrere Spritzgußformen 63 in gleichem Winkelabstand angeordnet. In die an der Übergabestation befindliche Spritzgußform 63′ wird die in einer zum Drehtisch 62 parallelen Ebene liegende Klenneinrichtung 36 mittels der Übergabeeinrichtung 61 überführt, mit den übrigen Formteilen der Spritzgußform in die Schließstellung gebracht und schließlich die Spritzgußform in der Position 63˝ abgespritzt. Danach durchläuft die Spritzgußform eine oder mehrere Kühlstationen, um in der Position 63‴ geöffnet zu werden. Dort erfolgt das Entformen des Spritzlings. Mittels eines Manipulators 64 werden die Klemmeinrichtungen vom Drehtisch 62 abgenommen und auf den Revolverteller 60 umgesetzt, während die entformten Spritzlinge in nachfolgende Bearbeitungsstationen 65 übergeben werden, z. B. zum Nachschneiden, Runden etc. Gegebenenfalls kann der Manipulator die fertig bearbeiteten Bürsten od. dgl. von den Stationen 65 in eine Verpackungsanlage 66 übergeben.

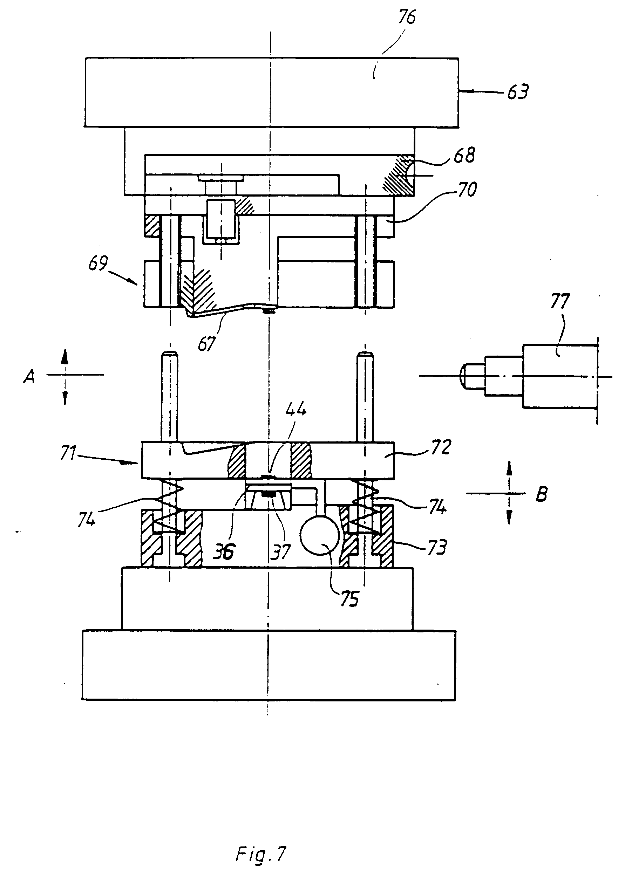

In Figur 7 ist eine Ausführunsform der Spritzgußform 63 gezeigt, wie sie zum Herstellen von Stielbürsten, wie Zahnbürsten 67 od. dgl., geeignet ist. Die Spritzgußform weist eine Haupttrennebene A und eine weitere Trennebene B auf. In der Haupttrennebene A wird der Spritzling entformt, während in der weiteren Trennebene B die Übergabe der Klemmeinrichtung 36 von dem Revolverteller 30 auf den Drehtisch 62 und zurück erfolgt. In Figur 7 ist die Spritzgußform in der geöffneten Stellung beim Entformen gezeigt (Position 63‴in Figur 6). Die Spritzgußform 63 weist ein Heißkanalvereilersystem 68 und ein düsenseitiges Formteil 69 auf, in das eine Konturenauswerferplatte 70 integriert ist. Die auswerferseitige Formeinheit 71 wird von einem Formteil 72 und der Klemmeinrichtung 36 gebildet, die gegenüber dem Formteil 72 verschiebbar ist. Die Klemmeinrichtung sitzt auf einem Übergabetisch 73 und wird durch die das Formteil 72 nach oben drückenden Federn 74 freigelegt. Ferner ist an der Spritzgußform, z. B. am Übergabetisch 73 eine Einrichtung 75 zum Lösen der Klemmeinrichtung 36 angeordnet.

Die düsenseitige Aufspannplatte 76 ist zusammen mit dem Formteil 69 nach unten verfahrbar, bis die Haupttrennebene A geschlossen ist. Beim weiteren Abwärtshub schließt sich auch der Spalt in der zweiten Trennebene B, wobei obere Stirnseite der Klemmeinrichtung 36 schließlich bündig mit der Kontur des Formteils abschließt. In dieser Position wird die Form mittels des Spritzaggregats 77 abgespritzt. Beim Entformen führt die Aufspannplatte 76 nach oben. Zuvor wird die Klemmeinrichtung 36 gelöst. Bei der Aufwärtsbewegung läuft zunächst das Formteil 72 mit, während die Klemmeinrichtung auf dem Übergabetisch 73 verbleibt, so daß es die Borsten freigibt und schließlich vom Formteil 72 freikommt. In dieser Position kann die Klemmeinrichtung 36 mit dem Manipulator 64 (Figur 6) an den Revolverteller 30 zurückgeführt werden, während der Spritzling - hier die Zahnbürste 67 mittels der Auswerferplatte 70 entformt und gleichfalls mit dem Manipulator 64 entnommen wird.

## Patentansprüche

1. Verfahren zur Herstellung von aus Borstenträger (41) und Borsten (37) aus Kunststoff bestehenden Borstenwaren, indem auf einer ersten Bewegungsbahn in aufeinander folgenden Stationen (1 bzw. 6) die Borsten (37) in einer dem Borstenbesatz an der fertigen Borstenware entsprechenden Anordnung und Anzahl mittels mitlaufender Klemmeinrichtungen (36) erfaßt, an ihrem dem Borstenträger zugekehrten Ende aufgeschmolzen und ggfls. geformt werden und auf einer zweiten Bewegungsbahn die Borstenträger (41) in aufeinander folgenden Stationen mittels mitlaufender Halter (40) an ihrer die Borsten aufnehmenden Seite zumindest bereichsweise aufgeschmolzen und/oder mit Borsten-Aufnahmelöchern versehen und schließlich die von Station zu Station getakteten Borsten (37) und Borstenträger (41) in noch plastischem Zustand zusammengefügt werden, dadurch gekennzeichnet, daß entweder die Klemmeinrichtungen (36) mit den Borsten (37) oder die Halter (40) mit den Borstenträgern (41) an einer Übergabestation (9) zu Beginn einer Übergabe-, Füge- und Kühlstrecke (9 bis 12) von der einen auf die jeweils andere Bewegungsbahn verbracht und am Ende der Übergabe- und Kühlstrecke mit mehreren Kühlstationen die Borsten aus den Klemmeinrichtungen (36) gelöst und entweder die Klemmeinrichtungen (36) oder die Halter (40) auf ihre jeweilige Bewegungsbahn zurückgeführt werden.

2. Verfahren nach Anspruch 1, dadurch gekennzeichnet, daß die Bewegungsbahnen der Klemmeinrichtungen (36) und der Halter (40) für die Borstenträger (41) zumindest entlang der mehrere Stationen (9 bis 12) aufweisenden Übergabe-, Füge- und Kühlstrecke parallel und in gleicher Bewegungsrichtung geführt werden.

3. Verfahren nach Anspruch 1 oder 2, dadurch gekennzeichnet, daß die Klemmeinrichtungen (36) mit den Borsten (37) und die Halter (40) mit den Borstenträgern (41) auf dem gleichen Durchmesser von gleichachsigen Kreisbahnen gleichsinnig und an der Übergabestation (9) achsparallel zwischen beiden bewegt werden.

4. Verfahren nach Anspruch 1 oder 2, dadurch gekennzeichnet, daß die Klemmeinrichtungen (36) mit den Borsten (37) und die Halter (40) mit den Borstenträgern (41) auf konzentrischen Kreisbahnen und an der Übergabestation (9) radial zwischen beiden bewegt werden.

5. Verfahren nach einem der Ansprüche 1 bis 4, dadurch gekennzeichnet, daß die Borsten (37) an einer ersten Station (1) der ersten Bewegungsbahn achsparallel ausgerichtet einer geöffneten Klemmeinrichtung (36) zugeführt, in dieser eingespannt, gegebenenfalls auf ihrer weiteren Bewegungsbahn an mehreren Heizstationen (2 bis 4) zum Aufschmelzen ihrer die Klemmeinrichtung überragenden Enden (44) und gegebenenfalls an einer Formstation (5, 6) zum Anformen einer Verdickung an den aufgeschmolzenen Borstenenden vorbeibewegt werden, während zugleich auf der zweiten Bewegungsbahn die Borstenträger (41) achsparallel in einen Halter (40) eingelegt, an ihrer Borsten-Aufnahmeseite bereichsweise aufgeschmolzen und/oder Aufnahmelöcher eingeformt werden, anschließend in der Übergabestation (9) der Halter (40) mit dem Borstenträger (41) und der Borsten-Aufnahmeseite voraus auf die erste Bewegungsbahn übergeben, dort mit der Klemmeinrichtung (36) unter Eindringen der Borstenenden (40) in die Borsten-Aufnahmeseite des Borstenträgers (41) verriegelt, in den folgenden Stationen (10 bis 12) die aus Halter (40) und Klemmeinrichtung (36) bestehende Einheit gekühlt wird, am Ende der Übergabe-, Füge- und Kühlstrecke die Verriegelung (42) gelöst und der Halter (40) mit der fertigen Borstenware auf die zweite Bewegungsbahn zurückgeführt und die Borstenware aus dem Halter entnommen wird.

6. Verfahren nach einem der Ansprüche 1 bis 5, dadurch gekennzeichnet, daß nach dem Rückführen des Halters (40) mit der fertigen Borstenware die freien Borstenenden in wenigstens einer weiteren Station (14, 15) nachbearbeitet werden.

7. Verfahren zur Herstellung von aus Borstenträger (41) und Borsten (37) aus Kunststoff bestehenden Borstenwaren, indem die Borsten in einer dem Borstenbesatz entsprechenden Anordnung und Anzahl in Aufnahmeöffnungen einer wenigstens zweiteiligen Form (63), in der der Borstenträger (41) durch Spritzen oder Ausschäumen hergestellt wird, eingeführt werden und mehrere Formen (63) auf einer geschlossenen Bewegungsbahn in Umlauf an einer den Kunststoff für den Borstenträger zuführenden Station (63''), wenigstens einer Kühlstation und einer Entnahmestation (63''') für die fertige Borstenware vorbeigeführt werden, dadurch gekennzeichnet, daß die Borsten (37) mittels einer die Aufnahmeöffnungen aufweisenden und ein Teil der Form bildenden Klemmeinrichtung (36) erfaßt und mehrere Klemmeinrichtungen auf einer ersten Bewegungsbahn mit wenigstens einer Bearbeitung- bzw. Behandlungsstation für die Borsten geführt werden und daß die Klemmeinrichtungen (36) zusammen mit den Borsten (37) an einer Übergabestation (63') unter Vervollständigung der Form (63) auf eine zweite Bewegungsbahn übergeben, nach Passieren mehrerer Kühlstationen an der letzten Kühlstation unter Freigabe der Borsten gelöst und nach der Entnahmestation (63''') auf die erste Bewegungsbahn zurückgeführt werden.

8. Verfahren nach Anspruch 7, dadurch gekennzeichnet, daß die die Borsten (37) aufnehmenden Klemmeinrichtungen (36) auf der ersten Bewegungsbahn an einer Zuführstation, in der die Borsten (37) in die Klemmeinrichtung (36) eingeführt werden, an wenigstens einer Heizstation (49), an der die befestigungsseitigen Enden (44) der Borsten (37) aufgeschmolzen werden, und an einer Kühlstation vorbeigeführt werden, bevor sie in die Übergabestation (63') gelangen.

9. Verfahren nach Anspruch 7 oder 8, dadurch gekennzeichnet, daß die aufgeschmolzenen Borstenenden (44) auf der ersten Bewegungsbahn in einer Formstation zwischen der Heizstation (49) und der Kühlstation zu einem Kopf, einer Platte od. dgl. geformt werden.

10. Verfahren nach einem der Ansprüche 7 bis 9, dadurch gekennzeichnet, daß die fertige Borstenware nach der Entnahmestation (63''') an einer oder mehreren Stationen einer weiteren Bewegungsbahn nachgearbeitet werden.

11. Verfahren nach einem der Ansprüche 1 bis 10, dadurch gekennzeichnet, daß bei der Verarbeitung der Borsten (37) von einem Endlosstrang (22) dieser mit seinem vorlaufenden Ende in die Klemmeinrichtung (36) eingespannt und die Borsten in einem der gewünschten Länge zuzüglich der für ihre Befestigung erforderlichen Länge entsprechenden Abstand vom vorlaufenden Ende des Endlosstrangs abgelängt werden.

12. Vorrichtung zur Durchführung des Verfahrens nach einem der Ansprüche 1 bis 6 mit einer Transporteinrichtung (30) mit einer kreisförmigen ersten Bewegungsbahn, die mehrere Stationen mit je einer Klemmeinrichtung (36) für die Borsten (37) aufweist und an deren erster Station (1) eine Zuführungseinrichtung (28) für die Borsten in die Klemmeinrichtung (36), an gegebenenfalls weiteren Stationen (2-6) eine Heizeinrichtung (49) für das Aufschmelzen und das Formen der Borstenenden (44) angeordnet und an einer weiteren Station (9) die Übergabe der Borsten auf eine zweite kreisförmige Bewegungsbahn einer Transporteinrichtung (31) vorgesehen ist, die ihrerseits mehrere Stationen (1 bis 8) mit je einem Halter (40) für den Borstenträger (41) aufweist und an deren erster Station (1) die Zuführung der Borstenträger (41) in die Halter (40), an einer weiteren Station (2,3) das Aufschmelzen der Borsten-Aufnahmeseite mittels einer Heizeinrichtung und/oder das Einformen von Borsten-Aufnahmelöchern erfolgt dadurch gekennzeichnet, daß die erste und die zweite Kreisbahn gleichachsig angeordnet und die Transporteinrichtungen (30,31) gleichsinnig angetrieben sind und daß hinter den Stationen (2 bis 4 bzw. 5,6) mit der Heizeinrichtung (49 bzw. 55) mehrere Stationen (9 bis 13) einer Übergabe-, Füge- und Kühlstrecke angeordnet sind, an deren erster eine Einrichtung zur Übergabe (47) der Halter (40) mit dem Borstenträger (41) oder der Klemmeinrichtungen (36) mit den Borsten (37) auf die jeweils andere Kreisbahn angeordnet ist und daß an dieser Kreisbahn eine Spanneinrichtung (48) vorgesehen ist, mittels der der Borstenträger (41) und die in der Klemmeinrichtung (36) befindlichen Borsten (37) zusammengehalten werden, und an deren folgenden Stationen (10 bis 12) eine Kühleinrichtung für die Borsten (37) und den Borstenträger (41) und eine Übergabe für die Rückführung der Klemmeinrichtungen (36) oder der Halter (40) auf ihre jeweilige Kreisbahn angeordnet ist.

13. Vorrichtung nach Anspruch 12, dadurch gekennzeichnet, daß die Transporteinrichtungen aus je einem Revolverteller (30, 31) bestehen, die auf Kreisbahnen gleichen Durchmessers die Klemmeinrichtungen (36) für die Borsten (37) bzw. die Halter (40) für die Borstenträger (41) aufweisen und die achsgleich angeordnet und gleichsinnig angetrieben sind und daß die Übergabeeinrichtung (47) für die Klemmeinrichtungen oder für die Halter achsparallel zwischen beiden Revolvertellern beweglich ist.

14. Vorrichtung nach Anspruch 12, dadurch gekennzeichnet, daß die Transporteinrichtungen von einem einzigen Revolverteller gebildet sind, der auf Kreisbahnen verschiedenen Durchmessers die Klemmeinrichtungen (36) für die Borsten (37) bzw. die Halter (40) für die Borstenträger (41) aufweist, und daß die Übergabeeinrichtung zwischen beiden Kreisbahnen radial beweglich ist.

15. Vorrichtung nach Anspruch 12, dadurch gekennzeichnet, daß dem Revolverteller (30) mit den Borsten-Klemmeinrichtungen (36) eine oder mehrere Formeinrichtungen (50) zugeordnet sind, die zwischen der letzten Station mit einer Heizeinrichtung (49) für die Borstenenden (44) und der Übergabestation (9) angeordnet sind und mittels der die aufgeschmolzenen Borstenenden zu einem Kopf, einer Platte od. dgl. umgeformt werden.

16. Vorrichtung nach einem der Ansprüche 12 bis 15, dadurch gekennzeichnet, daß zwischen der letzten Station (13) der Übergabe-, Füge- und Kühlstrecke und einer Abnahmestation (16) für die fertige Borstenware wenigstens eine weitere Station (14, 15) zum Nacharbeiten der freien Borstenenden z. B. zum Nachschneiden, Runden od. dgl., angeordnet ist.

17. Vorrichtung nach einem der Ansprüche 12 bis 16, dadurch gekennzeichnet, daß die an der Übergabestation (9) angeordnete Spanneinrichtung (48) zum Zusammenhalten des Borstenträgers (41) mit den in der Klemmeinrichtung sitzenden Borsten (37) auf der Kreisbahn (30) mit den Klemmeinrichtungen (36) sitzt.

18. Vorrichtung nach einem der Ansprüche 12 bis 17, dadurch gekennzeichnet, daß die Heizeinrichtungen (49) für die Borsten (37) ortsfest an der Vorrichtung angeordnet sind und sich über mehrere Stationen (2 bis 4) erstrekken.

19. Vorrichtung nach einem der Ansprüche 12 bis 18, dadurch gekennzeichnet, daß die Formeinheit (50) für die aufgeschmolzenen Borstenenden (44) sich über mehrere Stationen (5, 6) erstreckt und ortsfest, jedoch achsparallel verschiebbar angebracht und um jeweils eine Station mit dem Revolverteller (30) mitbewegbar und zurückführbar ist.

20. Vorrichtung nach einem der Ansprüche 12 bis 19, dadurch gekennzeichnet, daß die Heizeinrichtung (55) für die Borsten-Aufnahmeseite des Borstenträgers (41) mehrere Stationen (4 bis 7) am Revolverteller (31) übergreift und um jeweils eine Station mitbewegbar und rückführbar ist.

21. Vorrichtung nach einem der Ansprüche 12 bis 20, dadurch gekennzeichnet, daß eine zwischen beiden Kreisbahnen an oder vor der Übergabestation (9) wirksame Wendeeinrichtung (42, 43) für die Halter (40) bzw. die Borstenträger (41) oder für die Klemmeinrichtungen (36) mit den Borsten (37) vorgesehen ist, mittels der die befestigungsseitigen Borstenenden (44) und die Borsten-Aufnahmeseite des Borstenträgers (41) einander zugekehrt werden.

22. Vorrichtung zur Durchführung des Verfahrens nach einem der Ansprüche 7 bis 11 mit einer Transporteinrichtung (62) mit kreisförmiger Bewegungsbahn, die mehrere Stationen mit je einer wenigstens zweiteiligen Spritzguß- oder Schäumform (63) für den Borstenträger (41) mit Aufnahmeöffnungen für die Borsten (37) aufweist und an deren erster Station eine Zuführeinrichtung (26) für die Borsten (37) angeordnet ist und die eine Station für das Zuführen des Kunststoffs zur Spritzguß- oder Schäumform, wenigstens eine Kühlstation und eine Entnahmestation (63''') für die fertige Borstenware aufweist, dadurch gekennzeichnet, daß eine erste Transporteinrichtung (60) mit mehreren Klemmeinrichtungen (36) für die Borsten (37) und wenigstens einer Bearbeitungs- oder Behandlungsstation (49,50) für dieselben zwischen der Zuführeinrichtung (26) und der zweiten Transporteinrichtung (62) mit den Spritzguß- oder Schäumformen (63) vorgesehen ist, und daß jede Klemmeinrichtung (36) die Aufnahmeöffnungen, in denen die Borsten in der dem Borstenbesatz entsprechenden Zahl und Anordnung und mit einer für die Befestigung im Borstenträger notwendigen freien Länge klemmend gehalten sind, aufweist und ein Teil der wenigstens zweiteiligen Spritzguß- oder Schäumform (63) bildet, daß zwischen den beiden Transporteinrichtungen (60,62) eine Übergabeeinrichtung (61) zum Einsetzen der Klemmeinrichtung (36) in die offene Spritzguß- oder Schäumform (62) angeordnet ist und daß an oder hinter der Entnahmestation (63''') der zweiten Transporteinrichtung (62) eine Einrichtung (64) zum Zurückführen der von den Borsten gelösten Klemmeinrichtungen (36) zur ersten Transporteinrichtung (60) vorgesehen ist.

23. Vorrichtung nach Anspruch 22, dadurch gekennzeichnet, daß beide Transporteinrichtungen (60, 62) als Revolverteller ausgebildet sind, die eine gemeinsame Übergabestation (63') mit der Übergabeeinrichtung (61) für die Klemmeinrichtungen (36) aufweisen.

24. Vorrichtung nach Anspruch 22 oder 23, dadurch gekennzeichnet, daß an der ersten Transporteinrichtung (60) mit den Klemmeinrichtungen (36) wenigstens eine Station mit einer Heizeinrichtung (49) zum Aufschmelzen der freien Borstenenden (44) angeordnet ist.

25. Vorrichtung nach einem der Ansprüche 22 bis 24, dadurch gekennzeichnet, daß an der ersten Transporteinrichtung (60) wenigstens eine Station mit einer Formeinrichtung (50) zum Formen der aufgeschmolzenen Borstenenden (44) zu einem Kopf, einer Platte od. dgl. angeordnet ist.

26. Vorrichtung nach einem der Ansprüche 22 bis 25, dadurch gekennzeichnet, daß die Spritzguß- oder Schäumform (63) aus zwei Formteilen (69, 71) besteht, die zwischen sich die Formtrennebene (A) bilden und von denen das auswerferseitige Formteil von der Klemmeinrichtung (36) gebildet ist.

27. Vorrichtung nach einem dar Ansprüche 22 bis 25, dadurch gekennzeichnet, daß die Spritzguß- oder Schäumform (63) aus drei Formteilen besteht, von denen zwei Formteile (72, 36) auf der Auswerferseite sich zu einer auswerferseitigen Formeinheit (71) ergänzen und eines hier- von die Klemmeinrichtung (36) ist.

28. Vorrichtung nach Anspruch 27, dadurch gekennzeichnet, daß die Klemmeinrichtung (36) in dem anderen auswerferseitigen Formteil (72) zwischen einer die auswerferseitige Formeinheit (71) im Betriebszustand bildenden Position und einer Position verschiebbar ist, in der die Klemmeinrichtung (36) in der Übergabestation (63') in die Form einsetzbar bzw. in der Entnahmestation (63''') aus dieser entnehmbar ist.

29. Vorrichtung nach Anspruch 27 oder 28, dadurch gekennzeichnet, daß an der Spritzguß- oder Schäumform (63) eine Einrichtung (75) zum Lösen der Klemmeinrichtung (36) bei Beginn des Entformungsvorgangs angeordnet ist.

30. Vorrichtung nach einem der Ansprüche 12 bis 29 zur Verarbeitung der Borsten vom Endlosstrang, dadurch gekennzeichnet, daß die Borsten-Zuführeinrichtung (26) aus einer achsparallel zum Revolverteller (30) verschieblichen Spanneinrichtung (27, 28) besteht, die den Endlosstrang (22) am vorlaufenden Ende mit einem etwa der gewünschten Borstenlänge entsprechenden überstand erfaßt und in die offene Klemmeinrichtung (36) soweit einschiebt, daß die Borsten (37) an der gegenüberliegenden Seite um das für ihre Befestigung am Borstenträger (41) notwendige Maß vorragen, und daß der Spanneinrichtung (28) eine an ihrer vorderen Stirnseite wirksame Schneideinrichtung (38) zugeordnet ist, die nach dem Lösen und Zurückfahren der Spanneinrichtung (28) in die Ausgangslage die von der Klemmeinrichtung (36) erfaßten Borsten (37) auf Wunschmaß ablängt.

31. Vorrichtung nch einem der Ansprüche 12 bis 30, dadurch gekennzeichnet, daß die die Borsten (37) zuführende Spanneinrichtung (28) und die Borsten-Klemmeinrichtungen (36) auf dem Revolverteller (30) ineinander greifende Zentrierungen (39) aufweisen.

## Claims

1. Method for the manufacture of brushware comprising bristle carriers (41) and bristles (37) made from a plastics material, in that on a first movement path in successive stations (1 or 6) the bristles (37) gripped by means of moving clamping devices (36) in an arrangement and number corresponding to the bristle coverage of the finished brushware, are melted and optionally shaped at the end thereof facing the bristle carrier and on a second movement path in successive stations the bristle carriers (41) held by means of moving holders (40) are at least zonally melted on the side receiving the bristles and/or provided with bristle reception holes and finally the bristles (37) and bristle carriers (41) timed from station to station are joined together still in the plastic state, characterized in that either the clamping devices (36) with the bristles (37) or the holders (40) with the bristle carriers (41) in a transfer station (9) at the start of a transfer, joining and cooling section (9 to 12) are brought from one to the other of the movements paths and the end of the transfer and cooling section with several cooling stations the bristles are released from clamping devices (36) and either the clamping devices (36) or the holders (40) are returned on their respective movement path.

2. Method according to claim 1, characterized in that the movement paths of the clamping devices (36) and the holders (40) for the bristle carriers (41) are guided in parallel and in the same movement direction at least along the transfer, joining and cooling section having several stations (9 to 12).

3. Method according to claim 1 or 2, characterized in that the clamping devices (36) with the bristles (37) and the holders (40) with the bristle carriers (41) are moved on the same diameter of equiaxial circular paths in the same direction and at the transfer station (9) in axially parallel manner between the two.

4. Method according to claim 1 or 2, characterized in that the clamping devices (36) with the bristles (37) and the holders (40) with the bristle carriers (41) are moved on concentric circular paths and at the transfer station (9) radially between the two.

5. Method according to one of the claims 1 to 4, characterized in that the bristles (37) at a first station (1) of the first movement path are supplied in axially parallel oriented manner to an opened clamping device (36), are secured in the latter, optionally on their further movement path are passed several heating stations (2 to 4) for melting their ends (44) projecting over the clamping devices and optionally passed a shaping station (5,6) for shaping a thickened portion on the melted bristle ends, whilst at the same time on the second movement path the bristle carriers (41) are inserted in axially parallel manner in a holder (40), are zonally melted at their bristle reception side and/or reception holes are formed therein, then in the transfer station (9) the holder (40) with the bristle carrier (41) having it's bristle reception side at the front is transferred to the first movement path, locked there with the clamping device (36) accompanied by the penetration of the bristle ends (40) into the bristle reception side of the bristle carrier (41), in the following stations the unit comprising the holder (40) and the clamping device (36) is cooled (10 to 12), at the end of the transfer, joining and cooling section the locking means (42) is released and the holder (40) with the finished brushware is returned on the second movement path and the brushware is removed from the holder.

6. Method according to one of the claims 1 to 5, characterized in that following the return of the holder (40) with the finished brushware, the free bristle ends are reworked in at least one further station (14,15).

7. Method for producing brushware comprising bristle carriers (41) and bristles (37) made from a plastics material, in that the bristles in an arrangement and number corresponding to the bristle coverage of the finished brushware are introduced into the reception openings of an at least two-part mould (63), in which the bristle carrier (41) is produced by injection moulding or foaming and several moulds (63) are moved on a closed movement path in a revolving manner to a station (63") supplying the plastics material for the bristle carrier, at least one cooling station and a removal station (63 ) for the finished brushware, characterized in that the bristles (37) are gripped by a clamping device (36) having the reception openings and forming part of the mould and several clamping devices are guided on a first movement path with at least the clamping devices (36), together with the bristles, are transferred at a first transfer station (63), accompanied by the completion of the mould (63), to a second movement path, after passing through several sooling stations are detached at the final cooling station accompanied by the releasing of the bristles and following the removal station (63) are returned on the first movement path.

8. Method according to claim 7, characterized in that the clamping devices (36) receiving the bristles (37) are moved on the first movement path to a supply station in which the bristles (37) are inserted in the clamping device (36), to at least one heating station at which the fastening-side ends (44) of the bristles (37) are melted and to a cooling station, before passing into the transfer station (63').

9. Method according to claims 7 or 8, characterized in that the melted bristle ends (44) are shaped on a first movement path in a first shaping station between the heating station (49) and the cooling station so as to form a head, a plate, etc.

10. Method according to one of the claims 7 to 9, characterized in that the brushware, after the removal station (63''') is finished at one or more stations of a further movement path.

11. Method according to one of the claims 1 to 10, characterized in that on processing the bristles (37) from an endless strand (22), the latter is fixed with its leading end in the clamping device (36) and the bristles are cut in a distance from the leading end of the endless strand corresponding to the desired length, plus that length which is required for their fastening.

12. Apparatus for performing the method according to one of the claims 1 to 6 with conveying means (30) having a first, circular movement path, which has several stations with in each case a clamping device (36) for the bristles (37) and at its first station (1) a device (28) for supplying the bristles to the clamping mechanism (36), at optionally further stations (2-6) a heating device (49) for melting and shaping the bristle ends (44) and at a further station (9) a transfer of the bristles to a second, circular movement path of a conveying means (31), which in turn has several stations (1 to 8) with in each case one holder (40) for the bristle carrier (41) is supplied to the holder (40) and at a further station (2,3) by means of a heating device the bristle reception side is melted and/or bristle reception holes are formed therein, characterized in that the first and second circular paths are arranged equiaxially and the conveying means (30,31) are driven in the same direction and that behind the stations (2 to4 or 5,6) with the heating device (49 or 55) several stations (9 to 13) are located on a transfer, joining and cooling section, on the first of which there is a device (47) for the transfer of the holder (40) with the bristle carrier (41) or the clamping devices (36) with the bristles (37) to the in each case other circular path and that on said circular path is provided a clamping device (48), by means of which the bristle carrier (41) and the bristles (37) located in the clamping device (36) are held together and at its following stations (10 to 12) is provided a cooling device for the bristles (37) and the bristle carrier (41) and transfer means for returning the clamping devices (36) or the holders (40) to their respective circular path.

13. Apparatus according to claim 12, characterized in that the conveying means in each case comprise a revolving plate (30,31), which have on circular paths with the same diameter the clamping devices (36) for the bristles (37) or the holders (40) for the bristle carrier (41) and which are equiaxially arranged and driven in the same direction and that the transfer device (47) for the clamping devices or for the holders is movable in axially parallel manner between the two revolving plates.

14. Apparatus according to claim 12, characterized in that the conveying means are formed by a single revolving plate, which has on circular paths of different diameter the clamping devices (36) for the bristles (37) and the holders (40) for the bristle carriers (41) respectively and that the transfer device is radially movable between the two circular paths.

15. Apparatus according to claim 12, characterized in that with the revolving plate (30) having the bristle clamping devices (36) are associated one or more shaping units (50), which are positioned between the final station with a heating device (49) for the bristle ends (44) and the transfer station (9) and by means of which the melted bristle ends are shaped to a head, a plate, etc.

16. Apparatus according to one of the claims 12 to 15, characterized in that between the final station (13) of the transfer, joining and cooling section and a removal station (16) for the finished brushware is provided at least one further station (14,15) for reworking the free bristle ends, e.g. for shaving, rounding, etc.

17. Apparatus according to one of the claims 12 to 16, characterized in that the clamping device (48) positioned at the transfer station (9) and used for holding together the bristle carrier (41) and the bristles (37) located in the clamping device is positioned on the circular path (30) with the clamping devices (36).

18. Apparatus according to one of the claims 12 to 17, characterized in that the heating devices (49) for the bristles (37) are located in fixed manner on the apparatus and extend over several stations (2 to 4).

19. Apparatus according to one of the claims 12 to 18, characterized in that the sahping unit (50) for the melted bristle ends (44) extends over several stations (5,6) and is fitted in fixed, but axially prallel displaceable manner and is jointly moveable and returnable by each case one station with the revolving plate (30).

20. Apparatus according to one of the claims 12 or 20, characterized in that the heating device (55) for the bristle reception side of the bristle carrier (41) extends over several stations (4 to 7) at the revolving plate (31) and is jointly movable and returnable by in each case one station.

21. Apparatus according to one of the claims 12 to 20, characterized in that a reversing device (42,43) for the holders (40) of the bristle carriers (41) or for the clamping devices (36) with the bristles (37) acting between both circular paths at or upstream of the transfer station (9) is provided and by means thereof the fastening-side bristle ends (44) and the bristle reception side of the bristle carrier (41) are made to face one another.

22. Apparatus for performing the method according to one of the claims 7 to 11 with a conveying means (62) having a circular movement path, which has several stations with in each case at least one two-part injection or foaming mould (63) for the bristle carrier (41) with the reception opening for the bristles (37) and at whose first station is positioned a supply device (26) for the bristles (37) and which has a station for the supply of the plastics material to the injection or foaming mould, at least one cooling station and a removal station (63''') for the finished brushware, characterized in that a first conveying means (60) with several clamping devices (36) for the bristles (37) and at least one processing or treatment station (49,50) for the same is provided between the supply device (26) and the second conveying means (62) with the injection or foaming mould (63) and that each clamping device (36) has the rection openings in which are clampingly held the bristles in the number and arrangement corresponding to the bristle coverage of the finished brushware and with a free length necessary for fastening in the bristle carrier and forms part of the at least two-part injection or foaming mould (63), that between the two conveying means (60,62) is located a transfer device (61) for inserting the clamping device (36) in the open injection or foaming mould (62) and that at or behind the removal station (63''') of the second conveying means (62) is provided a device (64) for returning the clamping devices (36) released from the bristles to the first conveying means (60).

23. Apparatus according to claim 22, characterized in that both conveying means (60,62) are constructed as revolving plates, which have a joint transfer station (63') with the transfer device (61) for the clamping devices (36).

24. Apparatus according to claims 22 or 23, characterized in that at the first conveying means (60) with the clamping devices (36) is provided at least one station with a heating device (49) for melting the free bristle ends (44).

25. Apparatus according to one of the claims 22 to 24, characterized in that at the first conveying means (60) is provided at least one station with a shaping unit (50) for shaping the melted bristle ends (44) to form a head, a plate, etc.

26. Apparatus according to one of the claims 22 to 25, characterized in that the injection or foaming mould (63) comprises two mould parts (69,71), which form between them the mould parting plane (A) and whereof the ejector side mould part is formed by the clamping device (36).

27. Apparatus according to one of the claims 22 to 25, characterized in that the injection or foaming mould (63) comprises three mould parts, whereof two mould parts (72,73) on the ejector side are combined to a ejector side moulding unit (71) and one of these is the clamping device (36).

28. Apparatus according to claim 27, characterized in that the clamping device (36) is displaceable in the other ejector side mould part (72) between a position forming in the operating state the ejector side mould unit (71) and a position in which the clamping device (36) in the transfer station (62') is insertable in the mould or in the removal station (63''') is removable therefrom.

29. Apparatus according to claims 27 or 28, characterized in that at the injection or foaming mould (63) is provided a device (75) for releasing the clamping device (36) at the start of the mould removal process.

30. Apparatus according to one of the claims 12 to 29 for the processing of bristles from an endless strand, characterized in that the bristle supply device (26) comprises a clamping device (27,28) movable axially parallel to the revolving plate (30) and which grips the endless strand (22) at a distance from the leading end roughly corresponding to the clamping device (36) to such an extent that the bristles (37) at the opposite side project by the amount necessary for their fastening to the bristle carrier (41) and that with the clamping device (28) at this front face is associated a cutting device (38) which following the release and return of the clamping device (28) to the starting position cuts the bristles (37) gripped by the clamping device (36) to the desired length.

31. Apparatus according to one of the claims 12 to 30, characterized in that the clamping device (28) supplying the bristles (37) and the bristle clamping devices (36) have meshing centering means (39) on the revolving plate (30).

## Revendications

1. Procédé de fabrication de brosses constituées d'un support de poils (41) et de poils (37) en matière plastique selon lequel sur une première voie de transport, dans des stations successives (1 et respectivement 6), les poils (37) sont saisis, dans une disposition et en un nombre correspondant à la garniture de poils d'une brosse terminée, au moyen de dispositifs de serrage (36) couplés, fondus et éventuellement conformés à leur extrémité dirigée vers le support de poils et selon lequel, sur une seconde voie de transport, les supports de poils (41) sont fondus au moins par zones sur la surface qui reçoit les poils, dans des stations successives, au moyen de logements (40) couplés, et/ou munis de trous de réception de poils, les poils (37) transférés en cadence d'une station à l'autre et les supports de poils (41) étant finalement réunis à l'état encore plastique, **caractérisé en ce** que les dispositifs de serrage (36) avec les poils (37) ou les logements (40) avec les supports de poils (41) dans une station de transfert (9) sont déplacés, au début d'une section de transfert, d'assemblage et de refroidissement (9 à 12), d'une voie de transport à l'autre, que, à la fin de la section de transfert et de refroidissement avec plusieurs stations de refroidissement, les poils sont retirés des dispositifs de serrage (36) et que les dispositifs de serrage (36) ou les logements (40) sont ramenés dans leur voie de transport respective.

2. Procédé selon la revendication 1, caractérisé en ce que les voies de transport des dispositifs de serrage (36) et des logements (40) pour les supports de poils (41) sont guidées parallèlement et dans la même direction au moins le long de la section de transfert, d'assemblage et de refroidissement équipée de plusieurs stations (9 à 12).

3. Procédé selon l'une des revendications 1 ou 2, caractérisé en ce que les dispositifs de serrage (36) avec les poils (37) et les logements (40) avec les supports de poils (41) sont déplacés dans le même sens sur le même diamètre de voies circulaires avec le même axe et, à la station de transfert (9), parallèlement à l'axe entre les deux.

4. Procédé selon l'une des revendications 1 ou 2, caractérisé en ce que les dispositifs de serrage (36) avec les poils (37) et les logements (40) avec les supports de poils (41) sont déplacés sur des voies circulaires concentriques et, à la station de transfert (9), radialement entre les deux.

5. Procédé selon l'une des revendications 1 à 4, caractérisé en ce que, dans une première station (1) de la première voie de transport, les poils (37) alignés parallèlement à l'axe sont amenés vers un dispositif de serrage (36) ouvert, fixés dans celui-ci, déplacés éventuellement sur leur voie de transport ultérieure devant plusieurs stations de chauffage (2 à 4) pour la fusion de leurs extrémités (44) dépassant dudit dispositif de serrage, et éventuellement devant une station de façonnage (5, 6) pour la conformation d'un gonflement aux extrémités fondues des poils, alors que sur une seconde voie de transport, les supports de poils (41) sont insérés parallèlement à l'axe dans un logement (40), fondus par zones sur leur face de réception de poils et/ou pourvus de trous de réception, que dans la station de transfert (9), le logement (40) est transféré, avec le support de poils (41) et la face de réception de poils vers l'avant, à la première voie de transport où il est verrouillé avec le dispositif de serrage (36), les extrémités (40) pénétrant dans la face de réception du support de poils (41), dans les stations suivantes 10 à 12, l'unité constituée du logement (40) et du dispositif de serrage (36) étant refroidie, le verrouillage (42) étant débloqué à la fin de la section de transfert, d'assemblage et de refroidissement, et le logement (40) avec la brosse terminée étant ramené sur la seconde voie de transport, puis la brosse étant retirée dudit logement.

6. Procédé selon l'une des revendications 1 à 5, caractérisé en ce que, après le retour du logement (40) avec la brosse terminée, les extrémités libres des poils sont retraitées dans au moins une station supplémentaire (14, 15).

7. Procédé de fabrication de brosses constituées d'un support de poils (41) et de poils (37) en matière plastique selon lequel les poils sont introduits, dans une disposition et en un nombre correspondant à la garniture de poils, dans des trous de réception d'un moule (63) constitué d'au moins deux parties et dans lequel le support de poils (41) est réalisé par injection ou moussage, et plusieurs moules (63) sont amenés en circuit fermé, sur une trajectoire continue, devant une station (63") fournissant la matière plastique pour le support de poils, au moins une station de refroidissement et une station de prélèvement (63"') pour la brosse terminée, caractérisé en ce que les poils (37) sont saisis au moyen d'un dispositif de serrage (36) présentant les ouvertures de réception et formant une partie du moule, plusieurs dispositifs de serrage étant guidés sur une première voie de transport avec au moins une station de travail ou de traitement, et qu'à une station de transfert (63'), les dispositifs de serrage (36) sont transférés, conjointement avec les poils (37) et en complétant le moule (63), à la seconde voie de transport, débloqués avec libération des poils à la sortie de la dernière station de refroidissement après le passage dans plusieurs stations de refroidissement, et ramenés, en aval de la station de prélèvement (63"'), à la première voie de transport.

8. Procédé selon la revendication 7, caractérisé en ce que les dispositifs de serrage (36) recevant les poils (37) sont déplacés sur la première voie de transport devant une station d'amenée dans laquelle les poils (37) sont introduits dans le dispositif de serrage (36), devant au moins une station de chauffage (49) dans laquelle les extrémités (44) côté fixation des poils (37) sont fondues, et devant une station de refroidissement avant de parvenir à la station de transfert (63').

9. Procédé selon l'une des revendications 7 ou 8, caractérisé en ce que, sur la seconde voie de transport, les extrémités (44) fondues des poils sont conformées en tête, plaque ou analogues dans une station de façonnage installée entre la station de chauffage (49) et la station de refroidissement.

10. Procédé selon l'une des revendications 7 à 9, caractérisé en ce que, en aval de la station de prélèvement (63"'), les brosses terminées sont soumises à un retraitement dans une ou plusieurs stations d'une voie de transport supplémentaire.

11. Procédé selon l'une des revendications 1 à 10, caractérisé en ce que, lors du traitement des poils (37) à partir d'un brin sans fin (22), ce dernier est fixé avec son extrémité antérieure dans le dispositif de serrage (36), et que les poils sont coupés à une distance de l'extrémité antérieure du brin sans fin qui correspond à la longueur désirée plus la longueur nécessaire pour leur fixation.

12. Dispositif pour la mise en oeuvre du procédé selon l'une des revendications 1 à 6, comprenant un dispositif de transport (30) avec une première voie de transport circulaire qui comporte plusieurs stations équipées chacune d'un dispositif de serrage (36) pour les poils (37), la première station (1) étant munie d'un système d'alimentation (28) pour l'amenée des poils dans le dispositif de serrage (36), des stations suivantes (2 à 6) éventuellement prévues étant équipées d'un système de chauffage (49) pour la fusion et le façonnage des extrémités (44) des poils et dans une autre station (9) étant prévu le transfert des poils à une seconde voie de transport d'un système de transport (31) qui comporte à son tour plusieurs stations (1 à 8) équipées chacune d'un logement (40) pour le support de poils (41), la première station (1) assurant l'amenée des supports de poils (41) dans les logements (40), une autre station (2, 3) étant prévue pour la fusion de la face de réception de poils au moyen d'un système de chauffage et/ou pour la conformation des trous de réception pour les poils, **caractérisé en ce** que les première et seconde voies de transport sont disposées sur un même axe, que les dispositifs de transport (30, 31) sont entraînés dans le même sens, qu'en aval des stations (2 à 4 et respectivement 5, 6) équipées du système de chauffage (49 et respectivement 55) sont installées plusieurs stations (9 à 13) d'une section de transfert, d'assemblage et de refroidissement, dont la première comporte un dispositif pour le transfert (47) des logements (40) avec le support de poils (41) ou des dispositifs de serrage (36) avec les poils (37) à respectivement l'autre voie circulaire, et que cette voie circulaire comporte un dispositif de fixation (48) au moyen duquel le support de poils (41) et les poils (37) insérés dans le dispositif de serrage (36) sont maintenus ensemble, et dont les stations suivantes (10 à 12) sont munies d'un système de refroidissement pour les poils (37) et le support de poils (41), ainsi que d'un système de transfert pour ramener les dispositifs de serrage (36) ou les logements (40) dans leur voie circulaire respective.

13. Dispositif selon la revendication 12, caractérisé en ce que les systèmes de transport sont constitués par respectivement un plateau revolver (30, 31) lesquels présentent sur des voies circulaires de même diamètre les dispositifs de serrage (36) pour les poils (37) ou les logements (40) pour les supports de poils (41) et qui sont montés sur le même axe et entraînés dans la même direction, et que le système de transfert (47) pour les dispositifs de serrage ou pour les logements peut être déplacé parallèlement à l'axe entre les deux plateaux revolvers.

14. Dispositif selon la revendication 12, caractérisé en ce que les systèmes de transport sont constitués par un seul plateau revolver qui comprend sur des voies circulaires de différents diamètres les dispositifs de serrage (36) pour les poils (37) et respectivement les logements (40) pour les supports de poils (41), et que le système de transfert peut être déplacé radialement entre les deux voies circulaires.

15. Dispositif selon la revendication 12, caractérisé en ce qu'au plateau revolver (30) avec les dispositifs de serrage (36) pour les poils sont associés un ou plusieurs dispositifs de façonnage (50) qui sont disposés entre la dernière station munie d'un système de chauffage (49) pour les extrémités (44) des poils et la station de transfert (9) et à l'aide desquels les extrémités fondues des poils sont conformées an une tête, une plaque ou analogue.

16. Dispositif selon l'une des revendications 12 à 15, caractérisé en ce qu'entre la dernière station (13) de la section de transfert, d'assemblage et de refroidissement et une station de réception (16) pour les brosses terminées est intercalée au moins une station supplémentaire (14, 15) pour le retraitement des extrémités libres des poils, par exemple pour les recouper, arrondir, etc.

17. Dispositif selon l'une des revendications 12 à 16, caractérisé en ce que le système de fixation (48) monté sur la station de transfert (9) et servant à maintenir ensemble le support de poils (41) et les poils (37) insérés dans le dispositif de serrage est installé dans la voie circulaire (30) avec les dispositifs de serrage (36).

18. Dispositif selon l'une des revendications 12 à 17, caractérisé en ce que les systèmes de chauffage (49) pour les poils (37) sont montés de manière stationnaire sur le dispositif et s'étendent sur plusieurs stations (2 à 4).

19. Dispositif selon l'une des revendications 12 à 18, caractérisé en ce que l'unité de façonnage (50) pour les extrémités (44) fondues des poils s'étend sur plusieurs stations (5, 6), qu'elle est installée de manière stationnaire mais déplaçable parallèlement à l'axe et qu'elle peut être entraînée et ramenée avec le plateau revolver (30) autour de respectivement une station.

20. Dispositif selon l'une des revendications 12 à 19, caractérisé en ce que le système de chauffage (55) pour la face de réception du support de poils (41) couvre plusieurs stations (4 à 7) sur le plateau revolver (31) et qu'il peut être entraîné et ramené autour de respectivement une station.

21. Dispositif selon l'une des revendications 12 à 20, caractérisé en ce qu'il comprend un dispositif de retournement (42, 43) pour les logements (40) et respectivement pour les supports de poils (41) ou pour les dispositifs de serrage (36) avec les poils (37) agissant entre les deux voies circulaires, sur ou en amont de la station de transfert (9), au moyen duquel les extrémités (44) des poils du côté fixation sont dirigées vers la face de réception du support de poils (41).

22. Dispositif pour la mise en oeuvre du procédé selon l'une des revendications 7 à 11, comprenant un système de transport (62) avec une voie de transport circulaire qui comporte plusieurs stations dont chacune est équipée d'un moule à injection ou à mousse (63) pour le support de poils (41) avec des ouvertures de réception pour les poils (37) qui est constitué d'au moins deux parties, et dont la première station est munie d'un dispositif d'amenée (26) pour les poils (37), et qui comprend une station pour l'amenée de la matière plastique vers le moule à injection ou à mousse, au moins une station de refroidissement et une station de prélèvement (63"') pour les brosses terminées, caractérisé en ce qu'un premier système de transport (60) avec plusieurs dispositifs de serrage (36) pour les poils (37) et au moins une station d'usinage ou de traitement (49, 50) pour ces derniers est prévu entre le système d'amenée (26) et le second système de transport (62) avec les moules à injection ou à mousse (63), que chaque dispositif de serrage (36) présente les ouvertures de réception dans lesquelles les poils sont enserrés en un nombre et dans une disposition correspondant à la garniture de poils et avec une longueur libre nécessaire pour la fixation dans le support de poils, et forme une partie du moule à injection ou à mousse (63) constitué d'au moins deux parties, qu'entre les deux systèmes de transport (60, 62) est installé un système de transfert (61) pour la mise en place du dispositif de serrage (36) dans le moule à injection ou à mousse (62) ouvert, et que sur ou en aval de la station de prélèvement (63"') du second système de transport (62) est prévu un dispositif (64) pour ramener au premier système de transport (60) les dispositifs de serrage (36) détachés des poils.

23. Dispositif selon la revendication 22, caractérisé en ce que les deux systèmes de transport (60, 62) sont conformés en plateaux revolvers qui comportent une station de transfert (63') commune avec le système de transfert (61) pour les dispositifs de serrage (36).

24. Dispositif selon l'une des revendications 22 ou 23, caractérisé en ce que le premier système de transport (60) avec les dispositifs de serrage (36) comprend au moins une station avec un système de chauffage (49) pour la fusion des extrémités (44) libres des poils.

25. Dispositif selon l'une des revendications 22 à 24, caractérisé en ce le second système de transport (60) comprend au moins une station de façonnage (50) pour la conformation des extrémités (44) fondues des poils en une tête, une plaque ou analogue.

26. Dispositif selon l'une des revendications 22 à 25, caractérisé en ce que le moule à injection ou à mousse (63) est constitué de deux éléments de moule (69, 71) qui forment entre eux le plan de séparation du moule (A) et dont l'élément de moule situé du côté éjection est constitué par le dispositif de serrage (36).

27. Dispositif selon l'une des revendications 22 à 25, caractérisé en ce que le moule à injection ou à mousse (63) est constitué de trois éléments de moule dont deux éléments de moule (72, 36) se complètent du côté éjection en une unité de moulage (71) du côté éjection, l'un desdits éléments de moule étant le dispositif de serrage (36).

28. Dispositif selon la revendication 27, caractérisé en ce que le dispositif de serrage (36) peut être déplacé dans l'autre élément de moule (72) situé du côté éjection, entre une position constituant l'unité de moulage (71) côté éjection en état de service et une position dans laquelle le dispositif de serrage (36) se trouvant dans la station de transfert (63') peut être inséré dans le moule ou retiré de celui-ci dans la station de prélèvement (63"').

29. Dispositif selon l'une des revendications 27 ou 28, caractérisé en ce que sur le moule à injection ou à mousse (63) est prévu un dispositif (75) pour le déblocage du dispositif de serrage (36) au début de l'opération de démoulage.

30. Dispositif selon l'une des revendications 12 à 29 pour le traitement des poils à partir d'un brin sans fin, caractérisé en ce que le dispositif d'amenée de poils (26) est constitué par un système de fixation (27, 28) déplaçable parallèlement à l'axe par rapport au plateau revolver (30), qui saisit le brin sans fin (22) à l'extrémité antérieure avec un dépassement correspondant sensiblement à la longueur désirée des poils et qui l'introduit dans le dispositif de serrage (36) ouvert jusqu'à ce que les poils (37) dépassent du côté opposé de la quantité nécessaire pour leur fixation sur le support de poils (41), et qu'au système de fixation (28) est associé un dispositif de coupe (38) qui agit sur la face frontale antérieure dudit système de fixation et coupe les poils (37) saisis par le dispositif de serrage (36) à la longueur voulue, après le déblocage du système de fixation (28) et son retour dans la position de départ.

31. Dispositif selon l'une des revendications 12 à 33, caractérisé en ce que le système de fixation (28) qui amène les poils (37), et les dispositifs de serrage (36) sur le plateau revolver (30) présentent des centrages (39) qui s'emboîtent l'un dans l'autre.
